# EUROPEAN PATENT SPECIFICATION

(11) **EP 2 775 689 B1**
(45) Date of publication and mention of the grant of the patent: **19.10.2016**
(21) Application number: 12846447.6
(22) Date of filing: 31.10.2012
(51) Int. Cl.: H04L 29/06

(54) **METHOD AND APPARATUS FOR IUT IN A WIRELESS COMMUNICATION SYSTEM**
VERFAHREN UND VORRICHTUNG FÜR ÜBERTRAGUNGEN ZWISCHEN BENUTZERVORRICHTUNGEN IN EINEM DRAHTLOSEN KOMMUNIKATIONSSYSTEM
PROCÉDÉ ET APPAREIL POUR UN TRANSFERT IUT DANS UN SYSTÈME DE COMMUNICATION SANS FIL

(30) Priority: 31.10.2011 US 201161553270 P; 01.11.2011 US 201161553952 P
(43) Date of publication of application: 10.09.2014
(73) Proprietor: LG Electronics Inc., Yeongdeungpo-gu Seoul 150-721 (KR)
(72) Inventor: KIM, Laeyoung, Anyang-si Gyeonggi-do 431-080 (KR); KIM, Taehyeon, Anyang-si Gyeonggi-do 431-080 (KR); KIM, Hyunsook, Anyang-si Gyeonggi-do 431-080 (KR)
(74) Representative: Cabinet Plasseraud
(86) International application number: PCT/KR2012/009036
(87) International publication number: WO 2013/066036

(56) References cited:
- WO-A1-2010/129427
- KR-A- 20100 115 184
- KR-A- 20100 121 327
- KR-A- 20110 051 138
- US-A1- 2011 182 235
- US-A1- 2011 231 553
- INTERDIGITAL COMMUNICATIONS: "Inter-UE transfer/replication control by the remote party", 3GPP DRAFT; S2-113328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548611, [retrieved on 2011-07-05]
- HUAWEI: "Comparison of mechanisms for IUT remote party restrictions", 3GPP DRAFT; S2-114120 UE-BASED REMOTE PARTY RESTRICT FOR IUT HW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju Island; 20111010, 4 October 2011 (2011-10-04), XP050549303, [retrieved on 2011-10-04]

## Description

### [Technical Field]

The present invention relates to a wireless communication system, and more particularly, to a method and apparatus for performing or supporting inter-UE transfer (IUT).

### [Background Art]

An Internet Protocol (IP) multimedia subsystem (IMS) is an architectural framework for delivering an IP multimedia service in various wired/wireless communication networks. In the IMS, a protocol such as session initiation protocol (SIP) applicable to various networks is used. The SIP is a signaling protocol for controlling a multimedia service session via an IP and may be used to establish, modify and finish a unicast or multicast session. That is, the IMS aids a user in easily accessing multimedia and voice data via various wired/wireless device(s).

Session(s) including one or more media flows (or media streams) may be configured via an IMS. An IMS session may indicate logical connection between a local side and a remote side via IMS network nodes. Here, a counterpart user equipment (UE) or server of a local-side UE may be referred to as a remote end or a remote party. That is, the remote end is an entity for exchanging media flows with the local-side UE via an IMS network.

A logical set of IMS sessions configured by a plurality of UEs may be referred to as a collaborative session. A controller UE controls the collaborative session and a controllee UE transmits and receives media flows without collaborative session control rights. Collaborative session control may include collaborative session release, supplementary service calling, inter-UE transfer (IUT) initiation, etc. The IUT means transfer, replication or sharing of some or all of media flows and/or collaborative session control rights between UEs. However, for example, proposals for restricting some IUT due to copyright or privacy issues have been suggested. For example, IUT restriction from a remote party has been proposed (InterDigital Communications: "Inter-UE transfer/replication control by the remote party", 3GPP DRAFT; S2-113328, 3GPP, MOBILE COMPETENCE CENTRE; 650, ROUTE DES LUCIOLES; F-06921 SOPHIA-ANTIPOLIS CEDEX; FRANCE, vol.

SA WG2, no. Naantali; 20110711).

### [Disclosure]

### [Technical Problem]

In an IUT operation of a local side, media flows need to be prevented from being transferred, replicated or shared without restrictions. Such IUT restrictions are for protecting privacy of a user of a remote end and for protecting copyrighted content. In order to satisfy service requirements related to IUT restrictions, since IUT restrictions are conventionally provided by agreement between network providers for an IUT service, overall static IUT restrictions are applied to all subscribers who subscribe to a network to which a remote end belongs. According to an existing IUT restriction operation, a method of enabling or disabling IUT restrictions to be applied to an individual session and/or individual media is not provided.

An object of the present invention devised to solve the problem lies in a method of dynamically and/or individually applying IUT restrictions per session and/or per media in an IUT operation.

The technical problems solved by the present invention are not limited to the above technical problems and other technical problems which are not described herein will become apparent to those skilled in the art from the following description.

### [Technical Solution]

The object of the present invention can be achieved by providing a method defined in independent claim 1 of, at an Internet protocol multimedia subsystem (IMS) network node, performing an inter-user equipment (UE) transfer operation associated with a first UE and a second UE including receiving a message including IUT restriction related information of a remote end from the remote end, receiving a message including an IUT request from the first UE, and determining whether the IUT operation is performed according to the IUT request based on the IUT restriction related information of the remote end.

In another aspect of the present invention, provided herein is an Internet protocol multimedia subsystem (IMS) network node apparatus defined in independent claim 10 for performing an inter-user equipment (UE) transfer operation associated with a first UE and a second UE including a transceiver module configured to transmit and receive a signal to and from an external device and a processor configured to control the transceiver module, wherein the processor is configured to receive a message including IUT restriction related information of a remote end from the remote end using the transceiver module, receive a message including an IUT request from the first UE using the transceiver module, and determine whether the IUT operation is performed according to the IUT request based on the IUT restriction related information of the remote end.

The embodiments of the present invention may include the following features.

The determining whether the IUT operation is performed may include transmitting IUT request related information to the remote end and performing the IUT operation when the IUT request is permitted by the remote end.

The IUT request related information may include at least one of information indicating that the requested IUT operation is one of transfer, replication or sharing or identification information of the second UE.

The determining whether the IUT operation is performed may include determining whether the IUT operation is performed based on the IUT restriction related information of the remote end without a query about whether the IUT request is permitted by the remote end.

When the IUT restriction related information of the remote end indicates that the IUT request is restricted, the IUT operation may not be performed.

The IUT restriction related information may include at least one of IUT restriction information per media, IUT restriction information per IUT operation type, IUT restriction information per target and information indicating whether the remote end has IUT restriction capabilities.

The method may further include determining whether the IUT restriction related information of the remote end is transmitted to the first UE.

Whether the IUT restriction related information of the remote end is transmitted to the first UE may be determined based on at least one of IUT restriction capability information of the first UE, IUT operation capability information of the first UE, subscriber information of a user to which the first UE belongs, IUT restriction related information of the remote end, IUT restriction supporting capability information of the network node or provider policy.

The message may be one of a session establishment related message between the first UE and the remote end or an IMS registration request message from the remote end.

The session establishment related message may be one of a session setup request message from the first UE, a response message of the remote end to session description protocol (SDP) offer from the first UE or a session setup response message of the remote end to the session setup request message from the first UE.

The IMS network node may be a service centralization and continuity application server (SCC AS) which serves the first UE.

Communication of each of the first UE, the second UE and the remote end of the IMS network node may be performed via a call session control function (CSCF).

It is to be understood that both the foregoing general description and the following detailed description are merely exemplary of the invention, and are intended to provide an overview or framework for understanding the nature and character of the invention as it is claimed.

### [Advantageous Effects]

According to the present invention, it is possible to provide a method of dynamically and/or individually applying IUT restrictions per session and/or per media in an IUT operation.

The effects of the present invention are not limited to the above-described effects and other effects which are not described herein will become apparent to those skilled in the art from the following description.

### [Description of Drawings]

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic diagram showing the structure of an evolved packet core (EPC);
FIG. 2 is a schematic diagram showing the structure of an IMS based wireless communication system;
FIGs. 3 to 5 are diagrams illustrating inter-UE transfer (IUT);
FIG. 6 is a flow diagram illustrating an example of establishing a collaborative session according to IUT;
FIG. 7 is a flow diagram illustrating an example of applying IUT restrictions;
FIGs. 8 to 14 are diagrams showing an IUT restriction operation process according to examples of the present invention; and
FIG. 15 is a diagram showing the configuration of a predetermined embodiment of a transceiver apparatus according to the present invention.

### [Best Mode for carrying out the invention]

The following embodiments are proposed by combining constituent components and characteristics of the present invention according to a predetermined format. The individual constituent components or characteristics should be considered optional on the condition that there is no additional remark. If required, the individual constituent components or characteristics may not be combined with other components or characteristics. In addition, some constituent components and/or characteristics may be combined to implement the embodiments of the present invention. The order of operations to be disclosed in the embodiments of the present invention may be changed to others. Some components or characteristics of any embodiment may also be included in other embodiments, or may be replaced with those of the other embodiments as necessary.

It should be noted that specific terms disclosed in the present invention are proposed for convenience of description and better understanding of the present invention, and the use of these specific terms may be changed to another format within the technical scope or spirit of the present invention.

In some instances, well-known structures and devices are omitted in order to avoid obscuring the concepts of the present invention and the important functions of the structures and devices are shown in block diagram form. The same reference numbers will be used throughout the drawings to refer to the same or like parts.

The embodiments of the present invention can be supported by the standard documents disclosed in at least one of an Institute of Electrical and Electronics Engineers (IEEE) 802 series system, a 3^{rd} Generation Partnership Project (3GPP) system, a 3GPP Long Term Evolution (LTE) system, and a 3GPP2 system. That is, the steps or portions, which are not described in order to make the technical spirit of the present invention clear, may be supported by the above documents. In addition, all the terms disclosed in the present document may be described by the above standard documents.

The following technologies are used for various wireless communication systems. For clarity, the following description focuses on 3GPP LTE and 3GPP LTE-A. However, technical features of the present invention are not limited thereto.

The terms used in the present specification are defined as follows:
- UE (user equipment): User equipment. The UE may be referred to as a terminal, a mobile equipment (ME) or a mobile station (MS). In addition, the UE may be a portable device such as a laptop, a mobile phone, a personal digital assistant (PDA), a smartphone or a multimedia device or a non-portable device such as a personal computer (PC) or a vehicle mounted device.
- IMS (IP multimedia subsystem): Subsystem for providing a multimedia service based on an IP.
- IMS registration: Process of, at a UE, informing a home IMS network of information about a current position thereof.
- IMPU (IP multimedia public user identity): Identity of an IMS user. The IMS user may have one or more IMPUs for communication with other users. In addition, a plurality of UEs may share one IMPU. The IMPU follows a SIP uniform resource identifier (URI) or Tel URI (resource identified by a phone number) format.
- AS (application server); Server for providing various multimedia services.
- Multimedia session continuity: Support terminal mobility or mobility between UEs while maintaining session continuity.
- SCC AS (service centralization and continuity application server): Application server supporting multimedia session continuity (see 3GPP TS 23.292 and 3GPP TS 23.237).
- Remote party or remote end: Counterpart UE or counterpart application server communicating with a UE. Device for performing transmission and/or reception of media flows at a remote side.
- Access leg: Logical connection between a UE of a local side and an IMS network node.
- Remote leg: Logical connection between a remote end and an IMS network node.
- IUT (inter-UE transfer): Operation for delivering (transferring, replicating or sharing) some or all of media flows in a session and/or service control rights (see 3GPP TS 23.237).
- Collaborative session: Logical set of IMS sessions over two or more UEs. A plurality of IMS sessions may be anchored on an SCC AS to be combined into one IMS collaborative session.
- Controller UE: UE for controlling a collaborative session. A service profile of a controller UE determines a service for a remote leg to a remote end which is a communication counterpart of a collaborative session. The controller UE may provide media flows for a collaborative session (that is, transmit and/or receive media flows). In addition, the controller UE may request IUT media control related procedures.
- Controllee UE: UE for providing media flows for a collaborative session (that is, transmit and/or receive media flows). The controllee UE may request IUT media control related procedures. At this time, authorization for this request depends on the controller UE. A plurality of controllee UEs may be present in a collaborative session.
- Hosting SCC AS: SCC AS for managing a dialog with a remote end for performing communication for a collaborative session. That is, the hosting SCC AS is an SCC AS serving the collaborative session.
- IUT media control related procedures: Control operation for media flows within a collaborative session or control operation requiring authorization of the controller UE within the collaborative session. The IUT media control related procedures may correspond to ability to transfer/add/replicate media flows or ability to remove/modify media flows of another UE, for example.
- Collaborative session control: Control operation performed only by the controller UE on the collaborative session. Collaborative session control is referred to as control rights for the collaborative session. Collaborative session control may correspond to ability to release the collaborative session, to call supplementary services or to authorize a request for IUT media control related procedures from another UE.
- CSCF (call session control function): Server or proxy server for processing SIP signaling packets in an IMS. This may be divided into a proxy-CSCF (P-CSCF), a serving-CSCF (S-CSCF) and an interrogating-CSCF (I-CSCF).

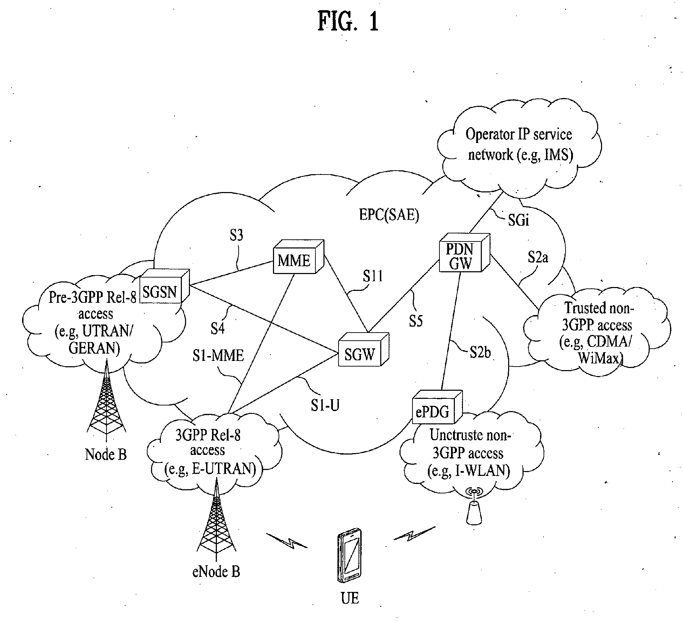

FIG. 1 is a diagram showing the schematic structure of an evolved packet core (EPC).

The EPC is a fundamental element of system architecture evolution (SAE) for improving 3GPP performance. SAE corresponds to a research project for deciding a network structure supporting mobility between various types of networks. SAE aims to provide an optimized packet-based system which supports various radio access technologies based on IP and provides improved data transfer capabilities.

More specifically, the EPC is a core network of an IP mobile communication system for a 3GPP LTE system and may support a packet-based real-time and non-real-time service. In existing mobile communication systems (that is, second or third generation mobile communication systems), a core network function is implemented through two distinct sub-domains of a voice network (a circuit-switched (CS) network) and a data network (a packet-switched (PS) network). However, in a 3GPP LTE system which is evolved from the third generation communication system, sub-domains of a CS network and a PS network were unified into one IP domain. That is, in a 3GPP LTE system, a terminal having IP capabilities and a terminal may be connected through an IP based base station (e.g., an eNodeB (evolved Node B)), an EPC, an application domain (e.g., an IMS)). That is, the EPC is a structure necessary to implement an end-to-end IP service.

The EPC may include various components. FIG. 1 shows a serving gateway (SGW), a packet data network gateway (PDN GW), a mobility management entity (MME), a serving GPRS (general packet radio service) (SGSN) supporting node and an enhanced packet data gateway (ePDG).

The SGW operates as a boundary point between a radio access network (RAN) and a core network and is an element which performs a function for maintaining a data path between an eNodeB and a PDG GW. In addition, if a terminal moves over a region served by an eNodeB, the SGW serves as a local mobility anchor point. That is, packets may be routed through the SGW for mobility in an evolved UMTS terrestrial radio access network (E-UTRAN) defined after 3GPP release-8. In addition, the SGW may serve as an anchor point for mobility of another 3GPP network (a RAN defined before 3GPP release-8, e.g., UTRAN or GERAN (global system for mobile communication (GSM)/enhanced data rates for global evolution (EDGE) radio access network).

The PDN GW corresponds to a termination point of a data interface for a packet data network. The PDN GW may support policy enforcement features, packet filtering and charging support. In addition, the PDN GW may serve as an anchor point for mobility management with a 3GPP network and a non-3GPP network (e.g., an untrusted network such as an interworking wireless local area network (I-WLAN) and a trusted network such as a code division multiple access (CDMA) or WiMax network).

Although the SGW and the PDN GW are configured as separate gateways in the example of the network structure of FIG. 1, the two gateways may be implemented according to a single gateway configuration option.

The MME performs signaling and control functions in order to support access to network connection of a UE, network resource allocation, tracking, paging, roaming and handover. The MME controls control plane functions associated with subscriber and session management. The MME manages numerous eNodeBs and signaling for selection of a conventional gateway for handover to other 2G/3G networks. In addition, the MME performs security procedures, terminal-to-network session handling, idle terminal location management, etc.

The SGSN handles all packet data such as mobility management and authentication of a user for other 3GPP networks (e.g., GPRS networks).

The ePDG serves as a security node for a non-3GPP network (e.g., an I-WLAN, a Wi-Fi hotspot, etc.).

As described with reference to FIG. 1, a terminal having IP capabilities may access an IP service network (e.g., an IMS) provided by an operator through various elements in the EPC based on 3GPP access or non-3GPP access.

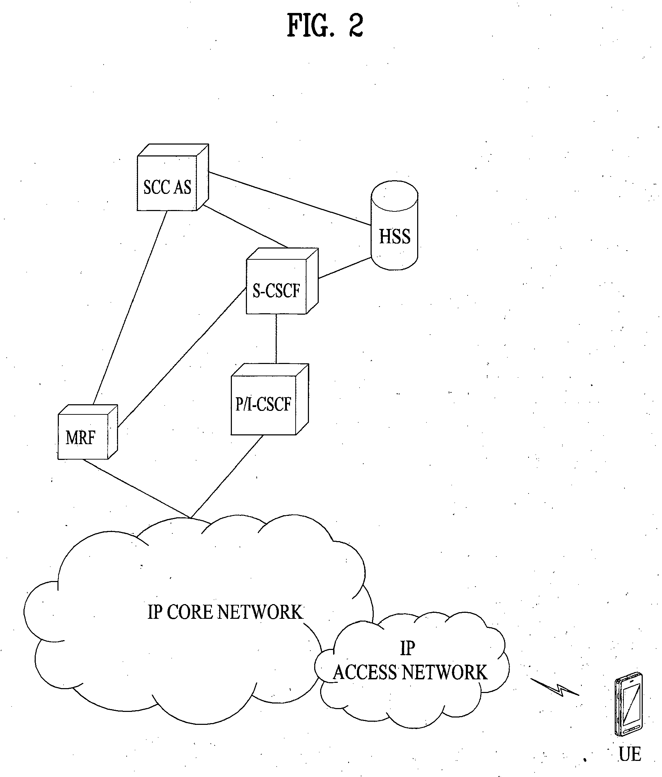

FIG. 2 is a schematic diagram showing the structure of an IMS based wireless communication system.

The IMS based wireless communication system may include various components. FIG. 2 shows a UE, access and core networks, an MRF, a P/I-CSCF, an S-CSCF, an AS, and a home subscriber server (HSS) among others.

The UE may perform communication with IMS related nodes and/or other UEs over IP based radio access and core networks, such as an E-UTRAN. The UE having IP capabilities may have a unique ID (e.g., IMPU ID such as SIP URI or Tel URI) and an IP address.

The MRF corresponds to a server for providing a media related function such as media adjustments (e.g., voice stream mixing) and includes an MRFC and an MRFP. The MRFC is responsible for interpreting information from the AS and the S-CSCF and controlling the MRFP. The MRFP is responsible for mixing, providing or processing media streams.

The P-CSCF is an SIP proxy server which is a contact point for an IMS UE. The P-CSCF may perform functions such as security of a message between a network and a UE and assignment of resources for media flows.

The I-CSCF is an SIP server which is a contact point from a peered network. The I-CSCF may perform a function for querying an HSS in order to determine an S-CSCF for a UE.

The S-CSCF is a server for handling SIP registration and performing UE positioning, UE authorization, call processing (e.g., call routing), etc. For example, when a UE is desired to be registered with an IMS network, a UE registration message including information about a media kind supported by the UE, codec related information or screen size information may be delivered to the S-CSCF via the P-CSCF. Operation of the S-CSCF may be controlled according to policy stored in the HSS.

The SCC AS is a home network based IMS application for providing functions required for an IMS centralized service and maintaining service continuity of multimedia sessions.

The HSS may perform functions such as configuration storage, identity management, user state storage, etc.

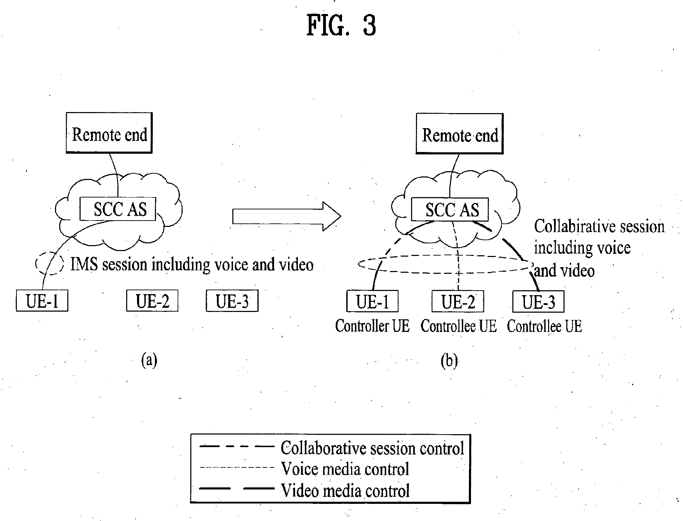

FIGs. 3 to 5 are diagrams illustrating inter UE transfer (IUT).

In the examples of FIGs. 3 to 5, a plurality of UEs UE-1, UE-2 and UE-3 may be associated UEs belonging to one user domain or independent UEs belonging to different users. In the examples of FIGs. 3 to 5, for convenience of description, assume that UE-1, UE-2 and UE-3 are associated UEs belonging to one user domain. However, this is only exemplary and UE-1, UE-2 and UE-3 may be independent UEs. In addition, although only three UEs are shown in the examples of FIGs. 3 to 5, a larger number of associated UEs may be present.

FIG. 3 shows an example in which a collaborative session is established by IUT of media flows.

In the example of FIG. 3(a), assume that a user performs a session including voice and video media with a remote end (e.g., a service provider). The session may be controlled by the SCC AS. Here, assume that the user performs the session with the remote end using UE-2 and UE-3. For example, UE-1 is a cellular phone, UE-2 is an earset or headset having a communication function and UE-3 is a display having a communication function. In addition, assume that the user wishes to perform the voice media session via UE-2 (that is, the earset or the headset) and to perform the video media session via UE-3 (that is, the display).

In this case, as shown in FIG. 3(b), in the session including the voice and video media, which has been performed via UE-1, the voice media flow is moved to UE-2 and the video media flow is moved to UE-3. At this time, even after the voice and video media flows are respectively moved to UE-2 and UE-3, UE-1 maintains control rights for the media flows. That is, UE-1 corresponds to a controller UE and UE-2 and UE-3 correspond to controllee UEs. In addition, the session, which includes the voice and video media flows and in which UE-1, UE-2 and UE-3 participate, corresponds to a collaborative session.

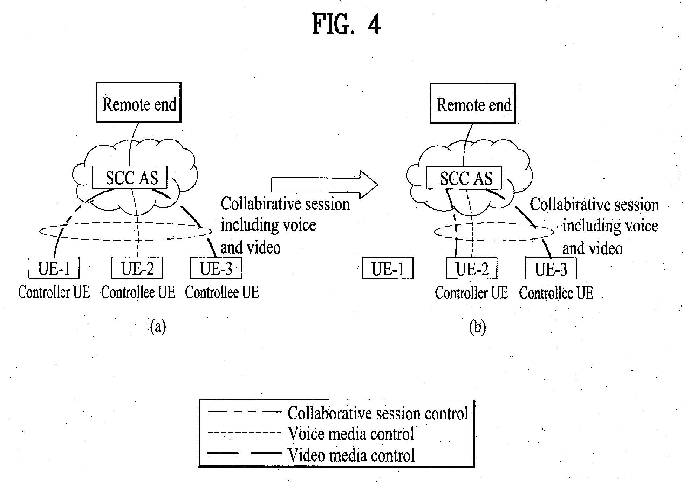

FIG. 4 shows an example of collaborative session control IUT.

In the example of FIG. 4(a), assume that a user is performing a session including an voice media flow using UE-2 and is performing a session including a video media flow using UE-3, and the media flows (that is, collaborative session) are being controlled via UE-1. At this time, the user may hand the control rights of UE-1 over to UE-2. That is, the example of FIG. 4 does not correspond to the IUT of the media flow shown in FIG. 3 but corresponds to an IUT of collaborative session control (or collaborative session control rights).

In this case, in the example of FIG. 4(b), UE performs the session including the voice media flow and has control rights for the collaborative session in which UE-2 and UE-3 participate. UE-3 performs the session including the video media flow without change. In this case, UE-2 becomes a controller UE, UE-3 is a controlle UE and UE-1 no longer belongs to the collaborative session.

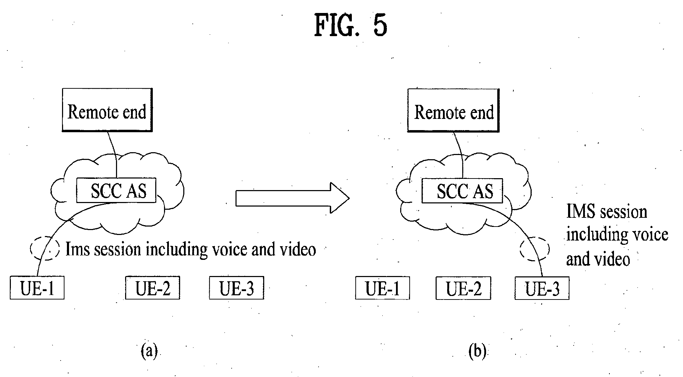

FIG. 5 is an example of IUT in which a collaborative session is not established.

In the example of FIG. 5(a), a user is performing a session including voice and video media flows with a remote end via UE-1. Here, assume that the user wishes to hand the session including the voice and video media flows and session control rights over to UE-3. In this case, in the example of FIG. 5(b), the session including the voice and video media flows is continuously performed via UE-3. In the example of FIG. 5(b), the collaborative session is not established.

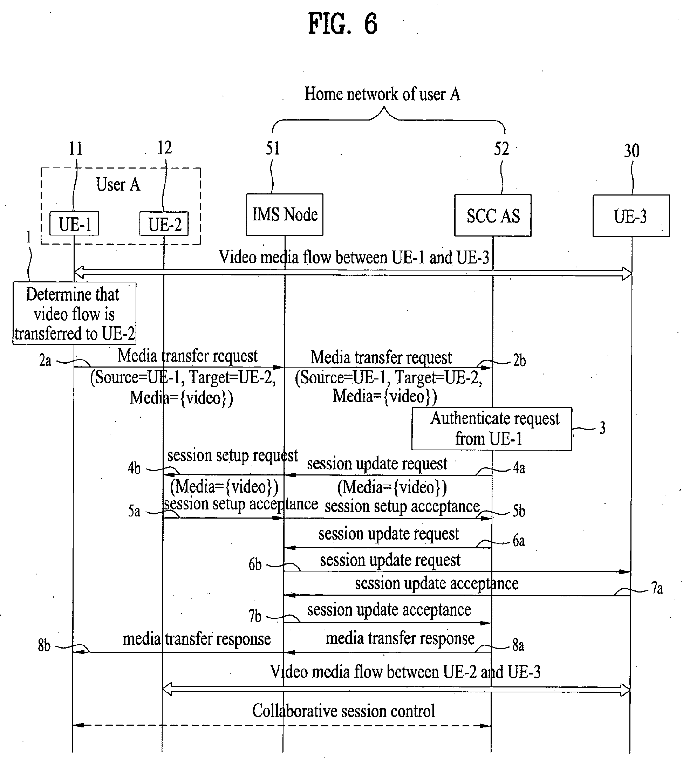

FIG. 6 is a flow diagram illustrating an example of establishing a collaborative session according to IUT.

In the example of FIG. 6, assume that UE-1 and UE-2 are associated UEs belonging to one user, for example, a user A. The present invention is not limited thereto and UE-1 and the same description is applicable to the case in which UE-2 may be independent UEs belonging to different users. In addition, the same description is applicable to the case in which two or more associated UEs are present.

An IMS network to or with which the UEs of the user A subscribe or are registered may mean a home network. If the UE(s) reside on a visited network, the UE(s) may be registered with the home network over the visited network. The home network includes an IMS node 51 and an SCC AS 52. Here, the IMS node 51 includes a CSCF such as a P-CSCF or an S-CSCF.

In the example of FIG. 6, assume that the user A wishes to maintain session continuity and hand the video media flow over to UE-2 12 in a state of performing the session including the video media with UE-3 30, which is a remote end, via UE-1 11. Here, assume that, even after the user A delivers the video media flow to UE-2 12, UE-1 11 wishes to maintain control rights for the media flow.

In step 1 of FIG. 6, UE-1 11 determines that the video media flow configuring the session with UE-3 30 is transferred to UE-2 12.

In steps 2a and 2b of FIG. 6, UE-1 11 transmits a transfer request message (e.g., media transfer request message) to the SCC AS 52 via the IMS node 51 in order to transfer the video media flow to UE-2 12.

In step 3 of FIG. 6, the SCC AS 52 authenticates or verifies the transfer request message from UE-1 11. Such authentication or verification may be performed based on subscriber information. For example, authentication or verification may include verifying whether IUT of UE-1 11 is permitted. Alternatively, authentication or verification may include verifying whether the media on the UE-1 11 may be transferred to UE-2 12.

In steps 4a and 4b of FIG. 6, the SCC AS 52 transmits a session setup (or session initiation) request message (e.g., an SIP based INVITE message) including information about the video media flow, transfer of which is requested, to UE-2 12 via the IMS node 51 based on the transfer request message.

In steps 5a and 5b of FIG. 6, UE-2 12 sends an acceptance message to the SCC AS 52 via the IMS node 51 in response to the session setup request message.

In steps 6a and 6b of FIG. 6, the SCC AS 52 transmits a session update request message (e.g., Re-INVITE message) including change information due to transfer of the video media flow to UE-3 30 via the IMS node 51.

In steps 7a and 7b of FIG. 6, UE-3 30 transmits a session update acceptance message from the SCC AS 52 in response to the session update request. Thus, the session including the video media is established between UE-2 12 and UE-3 30.

In steps 8a and 8b of FIG. 6, the SCC AS 52 transmits a response message (e.g., a media transfer response message) indicating completion of the transfer request to UE-1 11.

UE-1 11 has control rights for the collaborative session including the video media even after the video media flow is transferred to UE-2 12. That is, UE-1 11 becomes a controller UE and UE-2 12 becomes a controlle UE.

In association with IMS IUT, in Release-11 of 3GPP TS 22.228, service requirements "replication/transfer of some or all media components to target IMS UE(s), belonging to the same or to different user(s) that are subscribed to the same operator, shall not be performed when the remote end (e.g., the source of the media) of the session restricts such operation" are newly defined.

Up to now, in order to satisfy such service requirements, IUT restrictions have been provided by agreement for an IUT service between a network provider for providing IUT (that is, a home network provider to which UEs of a local side belong) and a network provider for providing a service to a remote end (that is, a home network provider to which a UE or server of a remote end belongs).

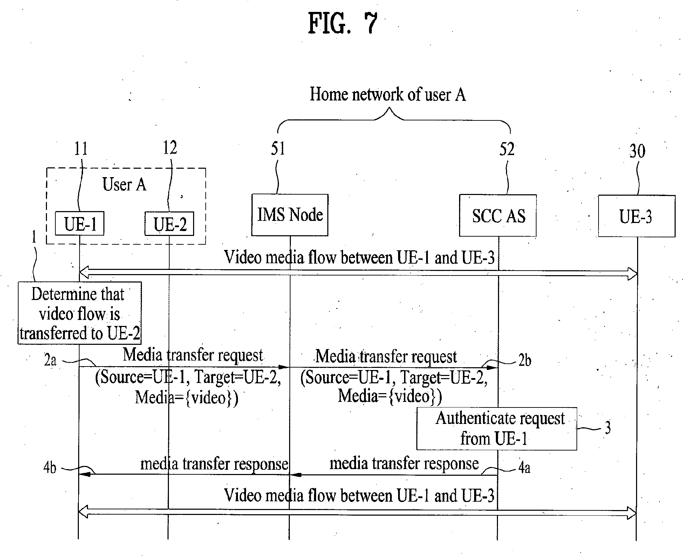

FIG. 7 is a flow diagram illustrating an example of applying IUT restrictions.

In step 1 of FIG. 7, UE-1 11 determines that the video media flow configuring the session with UE-3 30 is transferred to UE-2 12.

In steps 2a and 2b of FIG. 7, UE-1 11 transmits a transfer request message (e.g., media transfer request message) to the SCC AS 52 via the IMS node 51 in order to transfer the video media flow to UE-2 12.

In step 3 of FIG. 7, the SCC AS 52 authenticates or verifies the transfer request message from UE-1 11. Such authentication or verification may be performed based on subscriber information. For example, authentication or verification may include verifying whether IUT of UE-1 11 is permitted. Alternatively, authentication or verification may include verifying whether the media on the UE-1 11 may be transferred to UE-2 12.

Here, the authentication or verification process of the SCC AS 52 includes verification for IUT restrictions. For example, a determination as to whether there is an IUT restriction request (which is provided via service agreement between the network, to which the remote end belongs, and the network, to which the user A subscribes) of the network, to which the remote end belongs is made. If there is an IUT restriction request, the SCC AS 52 determines that a transfer request received from UE-1 11 is not performed.

In steps 4a and 4b of FIG. 7, the SCC AS 52 transmits a response message (e.g., a media transfer response message) indicating rejection of the media transfer request to UE-1 11. Even after the transfer request of UE-1 has been rejected, the video media flow between UE-1 11 and UE-3 30 is maintained.

IUT restrictions of FIG. 7 are provided by service agreement between network providers and have overall static attributes. That is, the same IUT restrictions are applied to all subscribers subscribing to the network, to which the remote end (e.g., UE-3 30) communicating with the UE (e.g., UE-1 11) which will perform IUT belongs, and the IUT restrictions are not changed without new service agreement.

For example, assume that the network (or the provider), to which the remote end belongs, is a network Y and users 1, 2 and 3 who subscribe to the network Y are present. At this time, the user 1 may not wish to perform an IUT operation of a communication counterpart thereof but the user 1 may wish to perform or may not care about performing an IUT operation of a communication counterpart thereof. In addition, the user 3 may or may not permit an IUT operation depending on communication counterpart thereof or according to the attributes of the media flow. That is, preferences for applying the IUT restrictions of the users 1, 2 and 3 may include "completely applied (restricted)", "not applied" (permitted) and "conditionally applied".

In addition, the user 1 who subscribes to the network Y may not wish that the communication counterpart thereof performs the IUT operation with respect to some of the media configuring the session. In other words, the user 1 may wish to perform or may not care about performing the IUT operation by the communication counterpart thereof with respect to the other media. That is, the user may wish to apply the IUT restrictions per session and/or per media. However, such various requirements of the user may not be satisfied by the method of applying the IUT restrictions shown in FIG. 7. Accordingly, there is a need for a method of dynamically and/or individually applying IUT restrictions per session and/or per media.

### Improved IUT restriction operation method

In the present invention, in order to solve the problems of the related art, a UE having IUT restriction capabilities may transmit "IUT restriction related information" to a network node and/or a counterpart UE. Here, in case of one or more of IMS registration, session establishment and session update, the IUT restriction related information may be delivered to the network node and/or the counterpart UE. For example, the UE having IUT restriction capabilities (or in which an IUT restriction function is activated) may perform IMS registration by including the IUT restriction related information, perform IMS session establishment by including the IUT restriction related information and/or perform IMS session update by including the IUT restriction related information.

As a detailed example, the UE may transmit the IUT restriction related information as a part of signaling for IMS registration when performing IMS registration. In this case, a node (e.g., an S-CSCF, an SCC AS, etc.) of an IMS network which serves the UE may store the IUT restriction related information and may transmit a message including the IUT restriction related information of the UE to a counterpart (e.g., a counterpart UE of a session or a node of an IMS network which serves the counterpart UE of the session) when the UE establishes the session or updates the session due to addition/removal of the media.

The following description of the IUT restriction related information proposed by the present invention is applicable to the below-described embodiments (e.g., Embodiments 1 to 7) of the present invention.

The IUT restriction related information proposed by the present invention may include at least one of i) IUT restriction information per media, ii) restriction information per IUT operation type, iii) IUT restriction information per target and iv) information as to whether the UE has IUT restriction capabilities.

The IUT restriction information per media of i) may include IUT restriction information individually applied to the media configuring the session or equally applied to all media. For example, the IUT restriction information per media may include information indicating that the IUT operation for Media-A is restricted if the media components configuring the session are Media-A and Media-B. Alternatively, the IUT restriction information per media may include information indicating that the IUT operation for Media-A and Media-B is restricted (in this case, the same effect may be obtained by including information indicating that the IUT operation for all media is restricted).

The restriction information per IUT operation type of ii) may include information indicating restrictions according to transfer, replication or sharing operations. For example, restriction information per IUT operation type include information indicating that only the transfer operation is restricted or information indicating that all IUT operations are restricted.

The IUT restriction information per target of iii) may include IUT restriction information applied depending on who or what is a target UE of the IUT operation. For example, the IUT restriction information per target may include information indicating that the IUT operation for a specific user is restricted or information indicating that the IUT operation for a specific user group is restricted.

The information of i) to iii) may be configured by various granularities and various combinations.

For example, according to the combination of the information of i) and ii), information indicating whether a specific IUT operation is restricted per media configuring the session may be configured. For example, if the media components configuring the session are Media-A and Media-B, information indicating that the transfer operation for Media-A is restricted may be configured or information indicating that the replication operation for all media is restricted may be configured.

Further, if the media components configuring the session are Media-A, Media-B and Media-C, information indicating that the transfer operation for Media-A is restricted and the replication operation for Media-B is restricted may be configured or information indicating that the transfer operation for Media-A is restricted and the replication operation for all media is restricted may be configured.

According to the combination of the information of i) and iii), information indicating whether the IUT operation for the individual media configuring the session is restricted per target may be configured. For example, if the media components configuring the session are Media-A and Media-B, information indicating that the IUT operation for Media-A is restricted per target may be configured or information indicating that the IUT operation for Media-A and Media-B is restricted per target may be configured (in this case, the same effect may be obtained by including information indicating that the IUT operation for all media is restricted per target).

According to the combination of the information of ii) and iii), information indicating whether a specific IUT operation is restricted per target may be configured. For example, information indicating that the transfer operation is restricted per target may be configured or information indicating that the replication operation or the sharing operation is restricted per target may be configured.

According to the combination of the information of i) and iii), information indicating whether a specific IUT operation for the individual media configuring the session is restricted per target may be configured. For example, if the media components configuring the session are Media-A and Media-B, information indicating that the transfer operation for Media-A is restricted per target may be configured or information indicating that the replication and sharing operations for Media-A and Media-B are restricted per target may be configured.

Preferably, the IUT restriction related information may be set to necessarily include the IUT restriction information per media of i). In this case, in order to configure information to apply IUT restrictions regardless of media, IUT restrictions for all media may be set to be applied.

Next, the information as to whether the UE has IUT restriction capabilities of iv) may be included as information indicating that the UE may interpret information about a request for the IUT operation if the request for the IUT operation (e.g., IUT operation restrictions) of a session which is being established is made.

Based on the above-described proposals of the present invention, a method of configuring IUT restriction related information will be described in detail.

The IUT restriction related information may be included in an SIP header of a session configuration related message or a session description protocol (SDP) message. In addition, for the IUT restriction related information, one or more of a new SIP header field, a parameter in the SIP header field, an SDP header field and a parameter of the SDP header field may be defined and used. Alternatively, for the IUT restriction related information, an existing header field or a parameter in the header field may be used. Alternatively, for the IUT restriction related information, the existing header field or the parameter in the header field may be reused and interpreted as a new meaning different from the existing meaning. Alternatively, a combination of the existing header/parameter and the newly defined header/parameter may be used to represent the IUT restriction related information.

For example, the IUT restriction related information may include information indicating that an IUT restriction operation is applied per media. Alternatively, information indicating that the IUT operation is restricted per media may be included in a message carrying the IUT restriction related information. For example, an indication or tag such as iut-restriction-per-media may be included in the message. If the message is a session configuration related message, for example, the IUT restriction related information may be included in the SIP header or the SDP message.

For example, the IUT restriction related information may include information indicating that an IUT restriction operation is applied per target. Alternatively, information indicating that the IUT operation is restricted per target may be included in a message carrying the IUT restriction related information. For example, an indication or tag such as iut-restriction-per-target may be included in the message. If the message is a session configuration related message, for example, the IUT restriction related information may be included in the SIP header or the SDP message.

The information such as iut-restriction-per-media/ iut-restriction-per-target may indicate whether IUT restrictions are applied per media/target. That is, information indicating to which media IUT restrictions are applied or to which target IUT restrictions are applied may be further included in the IUT restriction related information or the message carrying the IUT restriction related information. If the IUT operation for all media configuring the session is restricted, the value of a predetermined field (e.g., IUT_Restriction) may be set to a value indicating all media (e.g., IUT_Restriction=All). If the IUT operation for Media-A between Media-A and Media-B configuring the session is restricted, IUT_Restriction=Media-A may be set.

If information specifying the media, the IUT operation for which is restricted, is included, it may be indicated that IUT restrictions are applied per media, without indication such as iut-restriction-per-media. Similarly, if information specifying a target, the IUT operation for which is restricted, is included, it may be indicated that IUT restrictions are applied per target, without indication such as iut-restriction-per-target.

The per-target IUT restriction operation and the per-media IUT restriction operation may be simultaneously (or combinationally) applied. For example, application of per-target IUT restrictions to specific media (that is, an iut-restriction-per-target indication) may be indicated. Alternatively, information specifying a target, for which the IUT operation is restricted, for specific media (e.g., an IP address of the target, a public user identity, etc.) may be indicated.

Alternatively, in the case in which the per-target IUT restriction operation or the per-media IUT restriction operation is selectively performed, when any one IUT restriction operation is performed, the other IUT restriction operation may not be performed. For example, an indication or tag "iut-restriction-per-media" may be included in order to indicate that the IUT restriction related information is applied regardless of target.

In addition, if all IUT operations are not restricted but a specific IUT operation is restricted, information explicitly indicating the IUT operation to be restricted may be included in the IUT restriction related information. In addition, if a per-media IUT restriction operation and an IUT operation are simultaneously applied, for example, if replication of Media-A is not permitted, information "IUT_Restriction={Media-A:replication} may be explicitly included in a message (e.g., a session establishment related message) carrying the IUT restriction related message.

The scope of the present invention is not limited to the above examples and the IUT restriction related information may be configured by various combinations of one or more granularities of the information of i) to iv).

Although the IUT restriction related information is defined in the above examples of the present invention, IUT permission related information may be used according to the same principle. For example, information indicating an IUT operation permitted per media configuring a session may be configured.

An IUT operation for media (or IUT operation type or target) other than media (or IUT operation type or target) specified by the IUT restriction related information may be interpreted to be permitted. Similarly, an IUT operation for media (or IUT operation type or target) other than media (or IUT operation type or target) specified by the IUT permission related information may be interpreted to be restricted.

In addition, the examples described in the present invention are applicable to the case in which UEs establishing a session belong to users (or subscribers or IMS subscription) who subscribe to the same provider or the case in which UEs establishing a session belong to users (or subscribers or IMS subscription) who subscribe to different providers.

Hereinafter, detailed examples of the present invention, to which the above-described principles of the present invention are applicable, will be described.

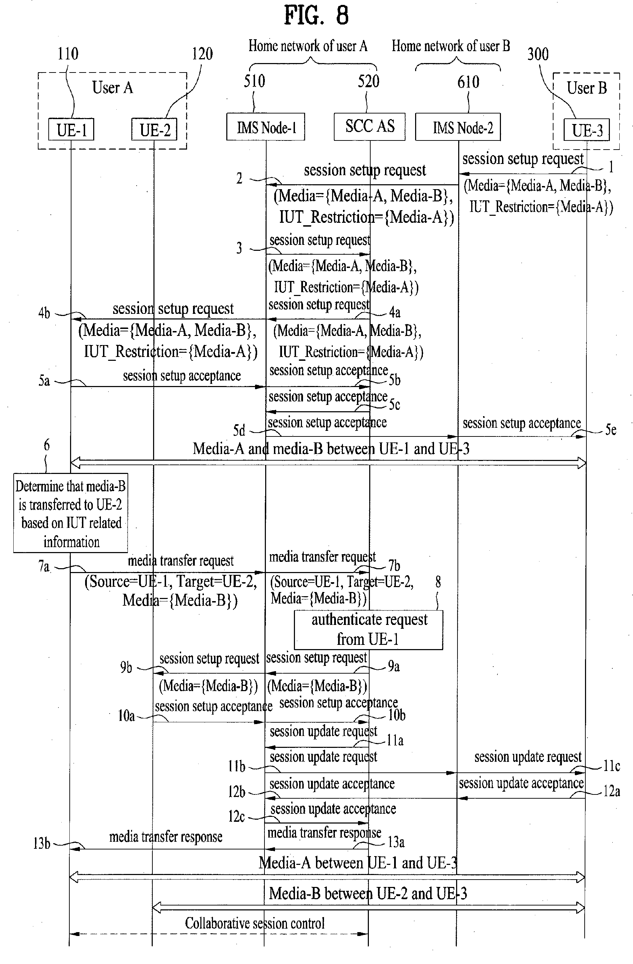

FIGs. 8 to 13 are diagrams showing an IUT restriction operation process according to examples of the present invention.

In the examples of FIGs. 8 to 13, assume that UE-1 110 and UE-2 120 belong to a user A and UE-3 300 belongs to a user B. However, the present invention is not limited thereto and the principles of the present invention are equally applicable to the case in which UE-1 and UE-2 belong to different users.

In the examples of FIGs. 8 to 13, home networks to which the users subscribe are shown. The home network to which the user A subscribes includes an IMS node-1 510 and an SCC AS 520. The home network to which the user B subscribes includes an IMS node-2 610. Each of the IMS node-1 510 and the IMS node-2 610 may include a CSCF (P-CSCF, S-CSCF and/or I-CSCF).

### Embodiment 1

The present embodiment relates to a method of transmitting IUT restriction related information via a session setup request message.

FIG. 8 shows an IUT restriction operation process according to one embodiment of the present invention.

In the example of FIG. 8, the user A maintains session continuity and transfers Media-B to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In step 1 of FIG. 8, in order to establish a session including Media-A and Media-B with UE-1 110, UE-3 300, which is a remote end, may send a session setup request message (e.g., SIP INVITE) to UE-1 110. The session setup request message may include information (that is, IUT restriction related information) indicating whether the IUT operation for the media configuring the session is restricted. In the example of FIG. 8, IUT_Restriction= {Media-A} information indicating that all IUT operations for Media-A are restricted without distinction of target is included.

In step 2 of FIG. 8, the IMS node-2 610 which serves UE-3 300 may route the session setup request message received from UE-3 300 to the IMS node-1 510 which serves UE-1 110.

In step 3 of FIG. 8, the IMS node-1 510 which serves UE-1 110 may transmit the received session setup request message to the SCC AS 520 which serves UE-1 110.

In steps 4a and 4b of FIG. 8, the SCC AS 520 which serves UE-1 110 may store the IUT restriction related information included in the session setup request message received from UE-3 300. In addition, the SCC AS 520 may transmit the session setup request image including the IUT restriction related information to UE-1 110. UE-1 110 may store the IUT restriction related information included in the received session setup request message.

Since the SCC AS 520 stores the IUT restriction related information of UE-3 300, when an IUT request is received from a target UE (e.g., UE-2 120), the SCC AS 520 may determine whether the requested IUT operation is performed based on the above information. For example, when UE-2 120 makes a request for replicating Media-A from UE-1 110, the SCC AS 520 may know that all IUT operations for Media-A are restricted from the IUT restriction related information and thus may not accept the request of UE-2 120.

Here, when the SCC AS 520 transmits the message received from UE-3 300, which is a remote end, to UE-1 110, a determination as to whether the IUT restriction related information of the remote end is included may be made based on at least one of the following information.
a) IUT restriction capability information (that is, information indicating whether UE-1 110 has IUT restriction capabilities) received from a counterpart (that is, UE-1 110) of an established session. For example, if UE-1 110 explicitly indicates that UE-1 110 has IUT restriction capabilities via a registration message, a session initiation request message, a session initiation response message, etc., the SCC AS 520 may transmit a message including IUT restriction related information received from the remote end (that is, UE-3 300) to UE-1 110.
b) IUT operation capability information received from UE-1 110. The IUT operation capability information may correspond to controller UE capability information, for example.
c) Subscriber information of a user to which UE-1 110 belongs.
d) IUT restriction related information sent by the remote end (UE-3 300). For example, if the IUT restriction related information of the remote end indicates that the IUT operation is restricted per media, a message including the IUT restriction related information received from the remote end may be transmitted. Alternatively, if the IUT restriction related information of the remote end indicates that the IUT operation is restricted per target, a message which does not include the IUT restriction related information received from the remote end may be transmitted.
e) IUT restriction supporting capabilities of the SCC AS 520.
f) Provider policy.

The SCC AS 520 may determine whether the message including the IUT restriction related information received from the counterpart UE (that is, the remote end (UE-3 300)) of the established session is transmitted to the UE (that is, UE-1 110)) served thereby based on at least one of a) to f). The present invention is not limited to the above examples and a determination as to whether the IUT restriction related information may be transmitted to the counterpart of the established session may be made according to various criteria.

The SCC AS 520 may include the IUT restriction related information received from the remote end (UE-3 300) in the message sent to UE-1 110 without change or may modify the IUT restriction related information and include the modified IUT restriction related information in the message sent to UE-1 110.

In steps 5a and 5b of FIG. 8, UE-1 110 may transmit a session setup response message (e.g., SIP 200 OK message indicating session establishment acceptance) to the SCC AS 520 via the IMS node-1 510 in response to the session setup request.

In steps 5c to 5e of FIG. 8, the SCC AS 520 may send the session setup response message to UE-3 300. Accordingly, a session including Media-A and Media-B is established between UE-1 110 and UE-3 300.

In step 6 of FIG. 8, UE-1 110 (or the user A) may confirm that the IUT operation for Media-B is permitted based on the IUT restriction related information (that is, the IUT restriction related information received from UE-3 300 which is a counterpart of the session) stored in step 4b. Here, assume that UE-1 110 (or the user A) determines that Media-B is transferred to UE-2 120.

In steps 7a and 7b of FIG. 8, UE-1 110 may transmit a transfer request message, for example, a media transfer request message (e.g., an SIP REFER message) to the SCC AS 520 in order to transfer Media-B to UE-2 120.

In step 8 of FIG. 8, the SCC AS 520 may authenticate or verify the transfer request message from UE-1 110. Such authentication or verification may be performed based on subscriber information of UE-1 110. For example, authentication or verification may include verifying whether the IUT operation of UE-1 110 is permitted. Alternatively, authentication or verification may include verifying whether the media on the UE-1 110 may be transferred to UE-2 120.

In steps 9a to 9b of FIG. 8, the SCC AS 520 may transmit the session setup request message including information about Media-B to UE-2 120 via the IMS node-1 510 based on the media transfer request message.

In steps 10a to 10b of FIG. 8, UE-2 120 may transmit a session setup response message (e.g., SIP 200 OK message indicating session setup acceptance) to the SCC AS 520 in response to the session setup request message.

In steps 11a to 11c of FIG. 8, the SCC AS 520 may transmit a session update request message (e.g., SIP Re-INVITE) including change information due to transfer of Media-B to UE-3 300 via the IMS node-1 510 and the IMS node-2 610.

In steps 12a to 12c of FIG. 8, UE-3 300 may transmit a session update acceptance message (e.g., SIP 200 OK message) in response to the session update request from the SCC AS 520. Thus, a session including Media-B may be established between UE-2 120 and UE-3 300.

In steps 13a to 13b of FIG. 8, the SCC AS 520 may transmit a response message; for example, a media transfer response message, indicating completion of the transfer request to UE-1 110 via the IMS node-1 510.

UE-1 110 has control rights for the collaborative session including Media-A and Media-B even after Media-B is transferred to UE-2 120. That is, UE-1 110 becomes a controller UE and UE-2 120 becomes a controllee UE.

In the example of FIG. 8, UE-3 300 includes the IUT restriction related information in the session setup request message of step 1 and provides the session setup request message to UE-1 110 via the SCC AS 520. However, the present invention is not limited thereto and UE-3 300 may include the IUT restriction related information in a message other than the message transmitted from UE-3 300 to UE-1 110 (via the SCC AS 520) for session setup between UE-1 110 and UE-3 300. Accordingly, each of the SCC AS 520 and UE-1 110 may store the IUT restriction related information.

In the present embodiment described with reference to FIG. 8, the IUT restriction related information of UE-3 300 may be included in one or more messages sent from UE-3 300 to UE-1 110 which is the counterpart of the session. In this case, UE-1 110 may hold last received information.

### Embodiment 2

The present embodiment relates to a method of transmitting IUT restriction related information via a session setup response message.

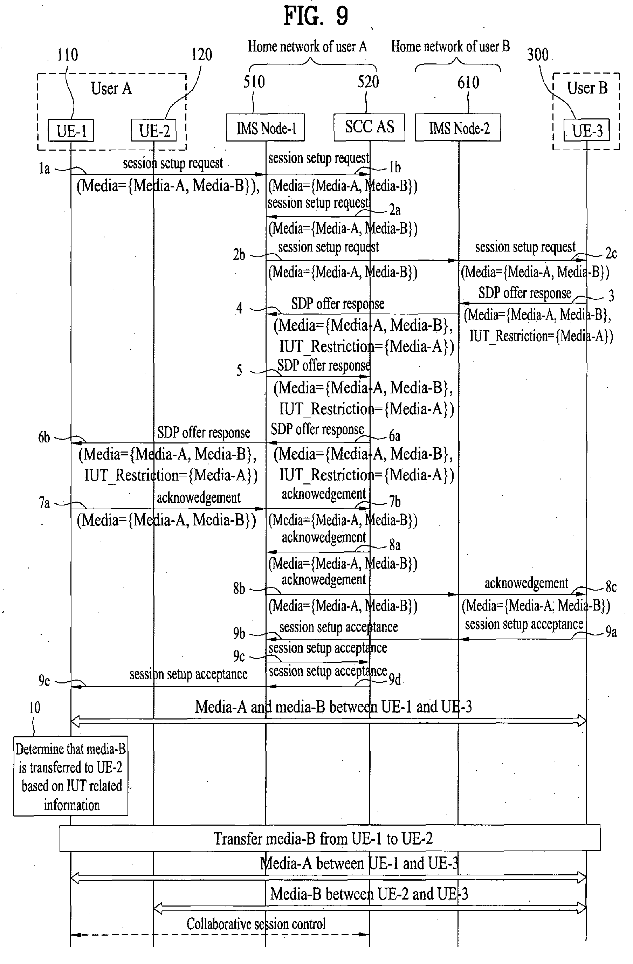

FIG. 9 shows an IUT restriction operation process according to one embodiment of the present invention.

In the example of FIG. 9, the user A maintains session continuity and transfers Media-B to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In step 1 of FIG. 9, in order to establish a session including Media-A and Media-B with UE-3 300, UE-1 110 may send a session setup request message (e.g., SIP INVITE) to UE-3 300.

In steps 2a to 2b of FIG. 9, the SCC AS 520 which serves UE-1 110 may send the session setup request message to UE-3 300 via the IMS node-1 510 and the IMS node-2 610.

In step 3 of FIG. 9, UE-3 300 may transmit, to UE-1 110, a response message (e.g., SIP 183 session progress) to SDP offer included in the received session setup request message. The SDP offer response message may include information (that is, the IUT restriction related information) indicating whether the IUT operation for the media configuring the session is restricted. In the example of FIG. 9, IUT_Restriction= {Media-A} information indicating that all IUT operations for Media-A are restricted without distinction of target is included.

In step 4 of FIG. 9, the IMS node-2 610 which serves UE-3 300 may route the SDP offer response message received from UE-3 300 to the IMS node-1 510 which serves UE-1 110.

In step 5 of FIG. 9, the IMS node-1 510 which serves UE-1 110 may transmit the received SDP offer response message to the SCC AS 520 which serves UE-1 110.

In steps 6a to 6b of FIG. 9, the SCC AS 520 may store the IUT restriction related information included in the SDP offer response message received from UE-3 300. In addition, the SCC AS 520 may transmit the SDP offer response message including the IUT restriction related information to UE-1 110. UE-1 110 may store the IUT restriction related information included in the received SDP offer response message.

Since the SCC AS 520 stores the IUT restriction related information of UE-3 300, when an IUT request is received from a target UE (e.g., UE-2 120), the SCC AS 520 may determine whether the requested IUT operation is performed based on the above information. For example, when UE-2 120 makes a request for replicating Media-A from UE-1 110, the SCC AS 520 may know that all IUT operations for Media-A are restricted from the IUT restriction related information and thus may not accept the request of UE-2 120.

Here, when the SCC AS 520 transmits the message received from UE-3 300, which is a remote end, to UE-1 110, a determination as to whether the IUT restriction related information of the remote end is included may be made based on at least one of the following information: a) IUT restriction capability information received from a counterpart (that is, UE-1 110) of an established session; b) IUT operation capability information received from UE-1 110; c) subscriber information of a user to which UE-1 110 belongs; d) IUT restriction related information sent by the remote end UE-3 300; e) IUT restriction supporting capabilities of the SCC AS 520; or f) provider policy. The SCC AS 520 may include the IUT restriction related information received from the remote end (UE-3 300) in the message sent to UE-1 110 without change or modify the IUT restriction related information and include the modified IUT restriction related information in the message sent to UE-1 110.

In steps 7a to 7b of FIG. 9, UE-1 110 may transmit an acknowledgement message (e.g., SIP provisional response acknowledgement (PRACK) message) to the SCC AS 520 via the IMS node-1 510 in response to the SDP offer response message.

In steps 8a to 8c of FIG. 9, the SCC AS 520 may send the response acknowledgement message to UE-3 300 via the IMS node-1 510 and the IMS node-2 610.

In steps 9a to 9c of FIG. 9, UE-3 300 may transmit a session setup response message (e.g., SIP 200 OK message indicating session setup acceptance) to the SCC AS 520 via the IMS node-2 520 and the IMS node-1 510.

In steps 9d to 9e of FIG. 9, the SCC AS 520 may transmit the session setup response message to UE-1 110. Accordingly, a session including Media-A and Media-B is established between UE-1 110 and UE-3 300.

In step 10 of FIG. 9, UE-1 110 (or the user A) may confirm that the IUT operation for Media-B is permitted based on the IUT restriction related information (that is, the IUT restriction related information received from UE-3 300 which is a counterpart of the session) stored in step 6b. Here, assume that UE-1 110 (or the user A) determines that Media-B is transferred to UE-2 120.

In step 11 of FIG. 9, the IUT operation for transferring Media-B from UE-1 110 to UE-2 120 may be performed. For a detailed description of step 11 of FIG. 9, refer to description of steps 7a to 13b of FIG. 8.

UE-1 110 has control rights for the collaborative session including Media-A and Media-B even after Media-B is transferred to UE-2 120. That is, UE-1 110 becomes a controller UE and UE-2 120 becomes a controlle UE.

In the example of FIG. 9, UE-3 300 includes the IUT restriction related information in the SDP offer response message of step 3 and provides the SDP offer response message to UE-1 110 via the SCC AS 520. However, the present invention is not limited thereto and UE-3 300 may include the IUT restriction related information in the session setup response message (that is, a final response message (e.g., SIP 200 OK) to SIP INVITE) of step 9a. Alternatively, the IUT restriction related information may be included in a message (e.g., the 200 OK message sent by UE-3 300 in response to the session update message sent by UE-1 110) other than the message sent from UE-3 300 to UE-1 110 (via the SCC AS 520), for session setup between UE-1 110 and UE-3 300. That is, UE-3 300 may include the IUT restriction related information in the SDP offer response message, the session setup response message or another message transmitted to UE-1 110 via the SCC AS 520. Accordingly, each of the SCC AS 520 and UE-1 110 may store the IUT restriction related information.

In the present embodiment described with reference to FIG. 9, the IUT restriction related information of UE-3 300 may be included in one or more messages sent from UE-3 300 to UE-1 110 which is the counterpart of the session. In this case, UE-1 110 may hold last received information.

### Embodiment 3

The present embodiment relates to a method of transmitting IUT restriction related information via a session setup request message.

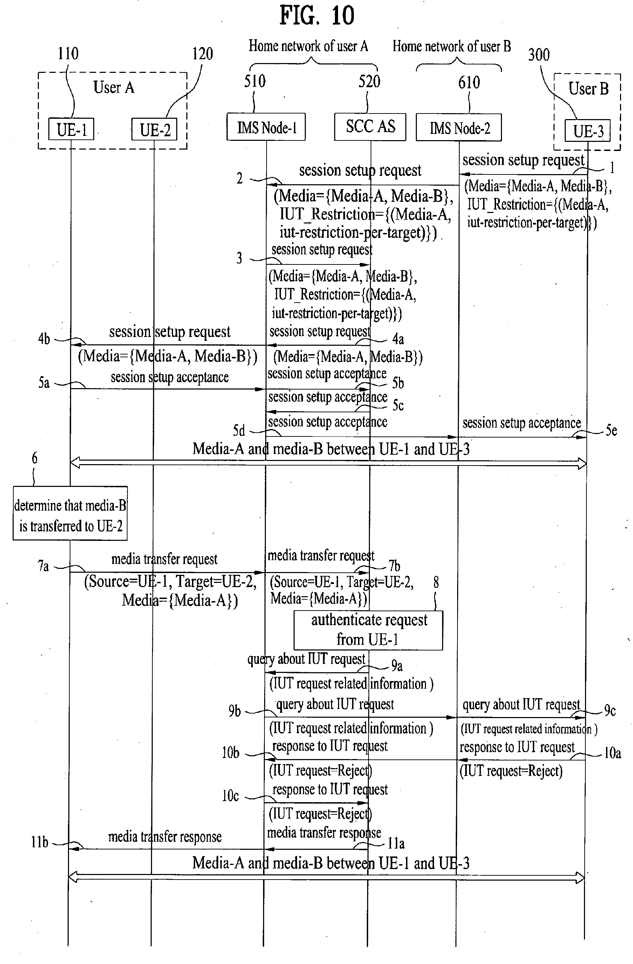

FIG. 10 shows an IUT restriction operation process according to one embodiment of the present invention.

In the example of FIG. 10, the user A maintains session continuity and transfers Media-A to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In step 1 of FIG. 10 in order to establish a session including Media-A and Media-B with UE-1 110, UE-3 300, which is a remote end, may send a session setup request message (e.g., SIP INVITE) to UE-1 110. The session setup request message may include information (that is, IUT restriction related information) indicating whether the IUT operation for the media configuring the session is restricted per target. As shown in step 1 of FIG. 10, an indication or tag "iut-restriction-per-target" may be included in the session setup request message including the IUT restriction related information. In the example of FIG. 10, the IUT restriction related information includes IUT_Restriction={Media-A, iut-restriction-per-target} information indicating that the IUT operation for Media-A are restricted per target.

In step 2 of FIG. 10, the IMS node-2 610 which serves UE-3 300 may route the session setup request message received from UE-3 300 to the IMS node-1 510 which serves UE-1 110.

In step 3 of FIG. 10, the IMS node-1 510, which serves UE-1 110, may transmit the received session setup request message to the SCC AS 520 which serves UE-1 110.

In steps 4a to 4b of FIG. 10, the SCC AS 520, which serves UE-1 110, may store the IUT restriction related information included in the session setup request message received from UE-3 300. In addition, the SCC AS 520 may transmit the session setup request image to UE-1 110. At this time, the SCC AS 520 may confirm that the received IUT restriction related information indicates that the IUT operation is restricted per target. According to the present example, the SCC AS 520 may remove the IUT restriction related information included in the received session setup request message and send the session setup request message to UE-1 110.

Here, when the SCC AS 520 transmits the message received from UE-3 300, which is a remote end, to UE-1 110, a determination as to whether the IUT restriction related information of the remote end is included may be made based on at least one of the following information: a) IUT restriction capability information received from a counterpart (that is, UE-1 110) of an established session; b) IUT operation capability information received from UE-1 110; c) subscriber information of a user to which UE-1 110 belongs; d) IUT restriction related information sent by the remote end UE-3 300; e) IUT restriction supporting capabilities of the SCC AS 520; or f) provider policy.

In steps 5a to 5b of FIG. 10, UE-1 110 may transmit a session setup response message (e.g., SIP 200 OK message indicating session establishment acceptance) to the SCC AS 520 via the IMS node-1 510 in response to the session setup request.

In steps 5c to 5e of FIG. 10, the SCC AS 520 may send the session setup response message to UE-3 300. Accordingly, a session including Media-A and Media-B is established between UE-1 110 and UE-3 300.

In step 6 of FIG. 10, assume that UE-1 110 (or the user A) determines that Media-A is transferred to UE-2 120.

In steps 7a to 7b of FIG. 10, UE-1 110 may transmit a transfer request message, for example, a media transfer request message (e.g., an SIP REFER message) to the SCC AS 520 in order to transfer Media-B to UE-2 120.

In step 8 of FIG. 10, the SCC AS 520 may authenticate or verify the transfer request message from UE-1 110. Such authentication or verification may be performed based on subscriber information of UE-1 110. For example, authentication or verification may include verifying whether the IUT operation of UE-1 110 is permitted. Alternatively, authentication or verification may include verifying whether the media on the UE-1 110 may be transferred to UE-2 120.

In steps 9a to 9c of FIG. 10, the SCC AS 520 may confirm that the requested IUT operation for Media-A is restricted per target based on the IUT restriction related information received from UE-3 300 stored in step 4a. Accordingly, the SCC AS 520 may transmit a message querying whether the IUT request is permitted to UE-3 300 via the IMS node-1 510 and the IMS node-2 520. The query message may be an existing message or a message newly defined for the present invention.

The query message may include the IUT request related information from UE-1 110. The IUT request related information may include information indicating to which operation the IUT request corresponds (e.g., a session setup request including media transfer, media replication or IUT operation, etc.), information about a target UE in which the IUT operation is performed (IP address, common user identifier, etc.) and information about media for which the IUT operation is performed. In addition, the IUT request related information may further include at least one of information indicating reception of the IUT request and information about the media with which the requested IUT operation is associated. In addition, the IUT request related information may include a variety of information related to the received IUT request.

In steps 10a to 10c of FIG. 10, assume that UE-3 300 (or the user B), which has received the query message for the IUT request from the SCC AS 520, does not wish to transfer Media-A to UE-2 120. In this case, UE-3 300 may transmit a response message (that is, rejection message) indicating that the IUT operation cannot be permitted to the SCC AS 520 via the IMS node-2 520 and the IMS node-1 510. Such a rejection response message may be an existing SIP message (e.g., one of Request Failure 4xx messages). Additionally, the rejection response message may include a parameter or information indicating that the IUT request is not permitted. Alternatively, the rejection response message may be a newly defined SIP response message indicating that the IUT request is rejected.

In steps 11a to 11b of FIG. 10, the SCC AS 520, which has received the rejection response message from UE-3 300, may determine that the IUT operation requested by UE-1 100 is not performed. Accordingly, the SCC AS 520 may transmit a message indicating that the IUT request has been rejected to UE-1 100 via the IMS node-1 510. The IUT request failure message may include a detailed IUT request failure reason. Thereafter, the session, which has been established between UE-1 110 and UE-3 300 in steps 1 to 5e, is not changed.

In the example of FIG. 10, UE-3 300 includes the IUT restriction related information in the session setup request message of step 1 and provides the session setup request message to UE-1 110 via the SCC AS 520. However, the present invention is not limited thereto and UE-3 300 may include the IUT restriction related information in a message other than the message transmitted from UE-3 300 to UE-1 110 (via the SCC AS 520) for session setup between UE-1 110 and UE-3 300.

Embodiment 3 is different from Embodiments 1 and 2 in that the SCC AS 520 queries whether the IUT request is permitted to the remote end. Here, the query about the IUT request may be determined based on the IUT restriction related information of the remote end. For example, if necessary information is included in the stored IUT restriction related information of the remote end such that the SCC AS 520 can determine whether the IUT request of UE-1 110 is permitted, the query may not be performed. If a determination as to whether the IUT request of UE-1 110 is permitted may not be accurately made using the stored IUT restriction related information of the remote end, the SCC AS 5200 may perform the query.

### Embodiment 4

The present embodiment relates to a method of transmitting IUT restriction related information via a session setup response message.

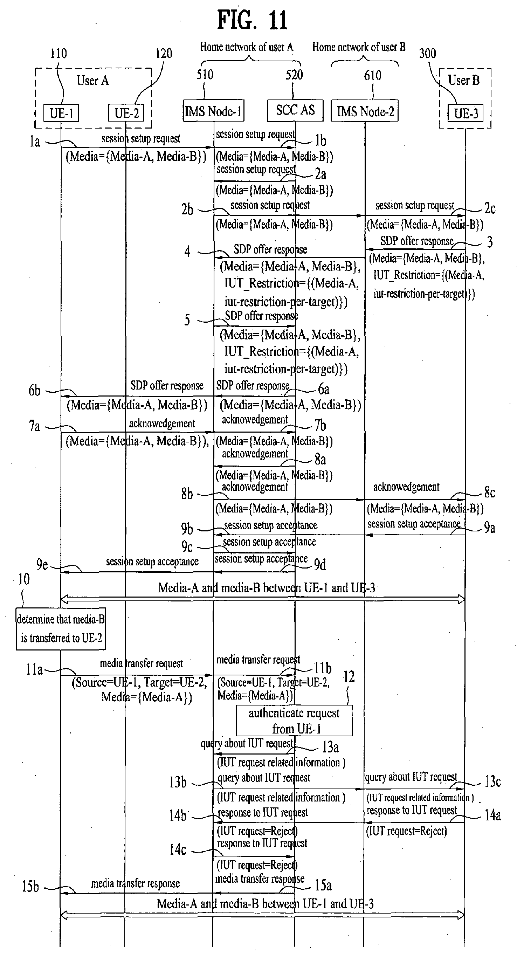

FIG. 11 shows an IUT restriction operation process according to one embodiment of the present invention.

In the example of FIG. 11, the user A maintains session continuity and transfers Media-A to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In steps 1a to 1b of FIG. 11, in order to establish a session including Media-A and Media-B with UE-3 300, UE-1 110 may send a session setup request message (e.g., SIP INVITE) to UE-3 300.

In steps 2a to 2c of FIG. 11, the SCC AS 520, which serves UE-1 110, may deliver the session setup request message to UE-3 300 via the IMS node 510 and the IMS node-2 610.

In step 3 of FIG. 11, UE-3 300 may transmit, to UE-1 110, a response message (e.g., SIP 183 session progress) to SDP offer included in the received session setup request message. The SDP offer response message may include information (that is, the IUT restriction related information) indicating whether the IUT operation for the media configuring the session is restricted per target. As shown in step 3 of FIG. 11, an indication or tag "iut-restriction-per-target" may be included in the SDP offer response message including the IUT restriction related information. In the example of FIG. 11, the IUT restriction related information includes IUT_Restriction= {(Media-A, iut-restriction-per-target)} information indicating that the IUT operation for Media-A are restricted per target.

In step 4 of FIG. 11, the IMS node-2 610, which serves UE-3 300, may route the SDP offer response message received from UE-3 300 to the IMS node-1 510, which serves UE-1 110.

In step 5 of FIG. 11, the IMS node-1 510, which serves UE-1 110, may transmit the received SDP offer response message to the SCC AS 520, which serves UE-1 110.

In steps 6a to 6b of FIG. 11, the SCC AS 520, which serves UE-1 110, may store the IUT restriction related information included in the SDP offer response message received from UE-3 300. In addition, the SCC AS 520 may transmit the SDP offer response message to UE-1 110. At this time, the SCC AS 520 may confirm that the received IUT restriction related information indicates that the IUT operation is restricted per target. According to the present example, the SCC AS 520 may remove the IUT restriction related information included in the received SDP offer response message and send the SDP offer response message to UE-1 110.

Here, when the SCC AS 520 transmits the message received from UE-3 300, which is a remote end, to UE-1 110, a determination as to whether the IUT restriction related information of the remote end is included may be made based on at least one of the following information: a) IUT restriction capability information received from a counterpart (that is, UE-1 110) of an established session; b) IUT operation capability information received from UE-1 110; c) subscriber information of a user to whom UE-1 110 belongs; d) IUT restriction related information sent by the remote end UE-3 300; e) IUT restriction supporting capabilities of the SCC AS 520; or f) provider policy.

In steps 7a to 7b of FIG. 11, UE-1 110 may transmit an acknowledgement message (e.g., SIP provisional response acknowledgement (PRACK) message) to the SCC AS 520 via the IMS node-1 510 in response to the SDP offer response message.

In steps 8a to 8c of FIG. 11, the SCC AS 520 may send the response acknowledgement message to UE-3 300 via the IMS node-1 510 and the IMS node-2 610.

In steps 9a to 9c of FIG. 11, UE-3 300 may transmit a session setup response message (e.g., SIP 200 OK message indicating session setup acceptance) to the SCC AS 520 via the IMS node-2 520 and the IMS node-1 510.

In steps 9d to 9e of FIG. 11, the SCC AS 520 may transmit the session setup response message to UE-1 110. Accordingly, a session including Media-A and Media-B is established between UE-1 110 and UE-3 300.

In step 10 of FIG. 11, assume that UE-1 110 (or the user A) determines that Media-A is transferred to UE-2 120.

Steps 11a to 15b of FIG. 11 is equal to steps 7a to 11b of FIG. 10 and thus a detailed description thereof will be omitted.

In the example of FIG. 11, UE-3 300 includes the IUT restriction related information in the SDP offer response message of step 3 and provides the SDP offer response message to UE-1 110 via the SCC AS 520. However, the present invention is not limited thereto and UE-3 300 may include the IUT restriction related information in the session setup response message (that is, a final response message (e.g., SIP 200 OK) to SIP INVITE) of step 9a. Alternatively, the IUT restriction related information may be included in a message (e.g., the 200 OK message sent by UE-3 300 in response to the session update message sent by UE-1 110) other than the message sent from UE-3 300 to UE-1 110 (via the SCC AS 520), for session setup between UE-1 110 and UE-3 300. That is, UE-3 300 may include the IUT restriction related information in the SDP offer response message, the session setup response message or another message transmitted to UE-1 110 via the SCC AS 520.

In step 9a of FIG. 10 and step 13a of FIG. 11, the SCC AS 520 provides the IUT request related information to UE-3 300 to query whether the requested IUT operation is permitted by UE-3 300. At this time, the IUT request related information may be piggybacked on remote leg update performed as the IUT operation of the SCC AS 520. Alternatively, the SCC AS 520 may include the IUT request related information in a separate message (an existing SIP message or a message newly defined for the present invention) and query whether the requested IUT operation is permitted by UE-3 300.

The per-media IUT restriction operation described Embodiments 1 and 2 and the per-target IUT restriction operation in Embodiments 3 and 4 are simultaneously (or combinationally) applicable. For example, if the media configuring the session established between UE-1 110 and the remote end (UE-3 300) is Media-A and Media-B, the remote end may include IUT restriction related information indicating that all IUT operations for Media-A are restricted and the IUT operation for Media-B is restricted per target and set the session up. In this case, UE-1 110 recognizes that the IUT operation for Media-A is not permitted based on the IUT restriction related information received from the remote end upon session setup. In contrast, UE-1 110 may request the IUT operation for Media-B. The SCC AS 520, which has received the IUT request, may provide the IUT request related information to the remote end based on the IUT restriction related information received from the remote end and perform the IUT operation requested by UE-1 110 based on the response (acceptance or rejection) of the remote end.

### Embodiment 5

The present embodiment relates to a method of transmitting IUT restriction related information via a session setup request message.

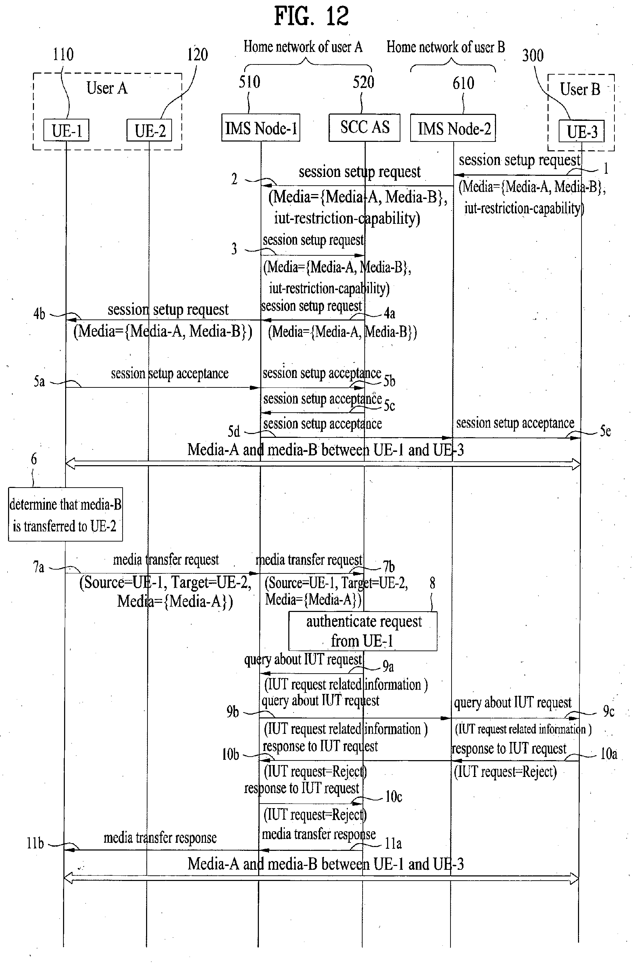

FIG. 12 shows an IUT restriction operation process according to one embodiment of the present invention.

In the example of FIG. 12, the user A maintains session continuity and transfers Media-A to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In step 1 of FIG. 12, in order to establish a session including Media-A and Media-B with UE-1 110, UE-3 300, which is a remote end, may send a session setup request message (e.g., SIP INVITE) to UE-1 110. The session setup request message may include information (that is, IUT restriction related information) indicating whether UE-3 300 has IUT restriction capabilities.

In step 2 of FIG. 12, the IMS node-2 610, which serves UE-3 300, may route the session setup request message received from UE-3 300 to the IMS node-1 510, which serves UE-1 110.

In step 3 of FIG. 12, the IMS node-1 510, which serves UE-1 110, may transmit the received session setup request message to the SCC AS 520, which serves UE-1 110.

In steps 4a to 4b of FIG. 12, the SCC AS 520, which serves UE-1 110, may store the IUT restriction related information (that is, the information indicating whether UE-3 300 has IUT restriction capabilities) included in the session setup request message received from UE-3 300. In addition, the SCC AS 520 may transmit the session setup request image to UE-1 110. The SCC AS 520 may remove the IUT restriction related information (that is, the information indicating whether UE-3 300 has IUT restriction capabilities) included in the received session setup request message and send the session setup request message to UE-1 110.

Here, when the SCC AS 520 transmits the message received from UE-3 300, which is a remote end, to UE-1 110, a determination as to whether the IUT restriction related information of the remote end is included may be made based on at least one of the following information: a) IUT restriction capability information received from a counterpart (that is, UE-1 110) of an established session; b) IUT operation capability information received from UE-1 110; c) subscriber information of a user to which UE-1 110 belongs; d) IUT restriction related information sent by the remote end UE-3 300; e) IUT restriction supporting capabilities of the SCC AS 520; or f) provider policy.

In steps 5a to 5b of FIG. 12, UE-1 110 may transmit a session setup response message (e.g., SIP 200 OK message indicating session establishment acceptance) to the SCC AS 520 via the IMS node-1 510 in response to the session setup request.

In steps 5c to 5e of FIG. 12, the SCC AS 520 may send the session setup response message to UE-3 300. Accordingly, a session including Media-A and Media-B is established between UE-1 110 and UE-3 300.

In step 6 of FIG. 12, assume that UE-1 110 (or the user A) determines that Media-A is transferred to UE-2 120.

In steps 7a to 7b of FIG. 12, UE-1 110 may transmit a transfer request message, for example, a media transfer request message (e.g., an SIP REFER message) to the SCC AS 520 in order to transfer Media-B to UE-2 120.

In step 8 of FIG. 12, the SCC AS 520 may authenticate or verify the transfer request message from UE-1 110. Such authentication or verification may be performed based on subscriber information of UE-1 110. For example, authentication or verification may include verifying whether the IUT operation of UE-1 110 is permitted. Alternatively, authentication or verification may include verifying whether the media on the UE-1 110 may be transferred to UE-2 120.

In steps 9a to 9c of FIG. 12, the SCC AS 520 may confirm that UE-3 300 has IUT operation restriction capabilities based on the IUT restriction related information (that is, the information indicating whether UE-3 300 has IUT restriction capabilities) received from UE-3 300 stored in step 4a. Accordingly, the SCC AS 520 may transmit a message querying whether the IUT request is permitted to UE-3 300 via the IMS node-1 510 and the IMS node-2 520. The query message may be an existing message or a message newly defined for the present invention.

The query message may include the IUT request related information from UE-1 110. The IUT request related information may include information indicating to which operation the IUT request corresponds (e.g., a session setup request including media transfer, media replication or IUT operation, etc.), information about a target UE in which the IUT operation is performed (IP address, common user identifier, etc.) and information about media for which the IUT operation is performed. In addition, the IUT request related information may include a variety of information related to the received IUT request.

In steps 10a to 10c of FIG. 12, assume that UE-3 300 (or the user B), which has received the query message for the IUT request from the SCC AS 520, does not wish to transfer Media-A to UE-2 120. In this case, UE-3 300 may transmit a response message (that is, rejection message) indicating that the IUT operation cannot be permitted to the SCC AS 520 via the IMS node-2 520 and the IMS node-1 510. Such a rejection response message may be an existing SIP message (e.g., one of Request Failure 4xx messages). Additionally, the rejection response message may include a parameter or information indicating that the IUT request is not permitted. Alternatively, the rejection response message may be a newly defined SIP response message indicating that the IUT request is rejected.

In steps 11a to 11b of FIG. 12, the SCC AS 520, which has received the rejection response message from UE-3 300, may determine that the IUT operation requested by UE-1 100 is not performed. Accordingly, the SCC AS 520 may transmit a message indicating that the IUT request has been rejected to UE-1 100 via the IMS node-1 510. The IUT request failure message may include a detailed IUT request failure reason. Thereafter, the session, which has been established between UE-1 110 and UE-3 300 in steps 1 to 5e, is not changed.

In the example of FIG. 12, UE-3 300 includes the IUT restriction related information in the session setup request message of step 1 and provides the session setup. request message to UE-1 110 via the SCC AS 520. However, the present invention is not limited thereto and UE-3 300 may include the IUT restriction related information in a message other than the message transmitted from UE-3 300 to UE-1 110 (via the SCC AS 520) for session setup between UE-1 110 and UE-3 300.

### Embodiment 6

The present embodiment relates to a method of transmitting IUT restriction related information via a session setup response message.

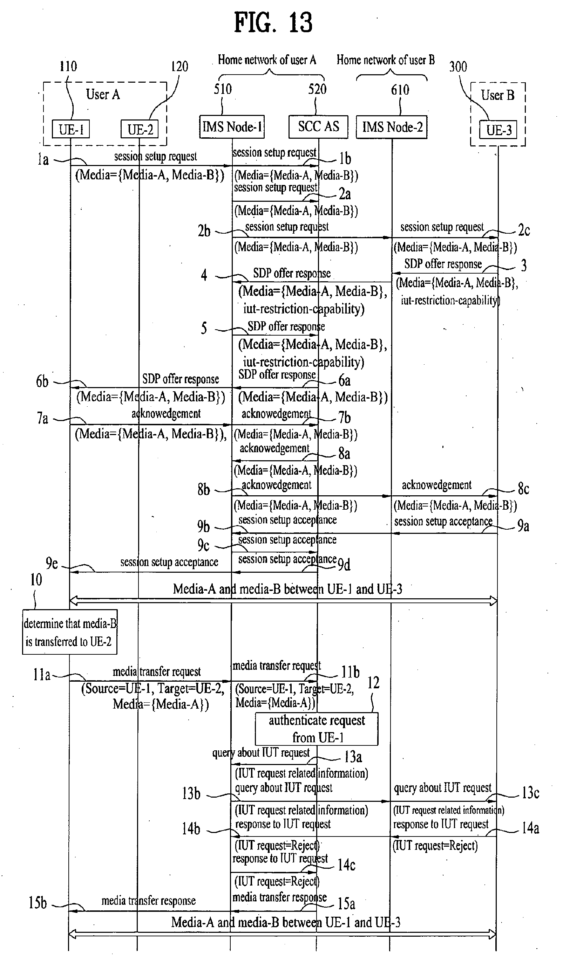

FIG. 13 shows an IUT restriction operation process according to one embodiment of the present invention.

In the example of FIG. 13, the user A maintains session continuity and transfers Media-A to UE-2 120 in a state in which the user A is performing a session including Media-A and Media-B with UE-3 300, which is a remote end, via UE-1 110. The present invention is not limited thereto and includes a method of configuring and transmitting/receiving IUT restriction related information according to the principle of the present invention when another IUT operation is performed.

In steps 1a to 1b of FIG. 13, in order to establish a session including Media-A and Media-B with UE-3 300, UE-1 110 may send a session setup request message (e.g., SIP INVITE) to UE-3 300.

In steps 2a to 2c of FIG. 13, the SCC AS 520, which serves UE-1 110, may deliver the session setup request message to UE-3 300 via the IMS node 510 and the IMS node-2 610.

In step 3 of FIG. 13, UE-3 300 may transmit, to UE-1 110, a response message (e.g., SIP 183 session progress) to SDP offer included in the received session setup request message. The SDP offer response message may include the IUT restriction related information (that is, the information indicating whether UE-3 300 has IUT restriction capabilities).

In step 4 of FIG. 13, the IMS node-2 610, which serves UE-3 300, may route the SDP offer response message received from UE-3 300 to the IMS node-1 510, which serves UE-1 110.

In step 5 of FIG. 13, the IMS node-1 510, which serves UE-1 110, may transmit the received SDP offer response message to the SCC AS 520, which serves UE-1 110.

In steps 6a to 6b of FIG. 13, the SCC AS 520 which serves UE-1 110 may store the IUT restriction related information (that is, the information indicating whether UE-3 300 has IUT restriction capabilities) included in the SDP offer response message received from UE-3 300. In addition, the SCC AS 520 may transmit the SDP offer response message to UE-1 110. At this time, the SCC AS 520 may remove the IUT restriction related information (that is, the information indicating whether UE-3 300 has IUT restriction capabilities) included in the received SDP offer response message and send the SDP offer response message to UE-1 110.

Here, when the SCC AS 520 transmits the message received from UE-3 300, which is a remote end, to UE-1 110, a determination as to whether the IUT restriction related information of the remote end is included may be made based on at least one of the following information: a) IUT restriction capability information received from a counterpart (that is, UE-1 110) of an established session; b) IUT operation capability information received from UE-1 110; c) subscriber information of a user to whom UE-1 110 belongs; d) IUT restriction related information sent by the remote end UE-3 300; e) IUT restrictions supporting capabilities of the SCC AS 520; or f) provider policy.

In steps 7a to 7b of FIG. 13, UE-1 110 may transmit an acknowledgement message (e.g., SIP provisional response acknowledgement (PRACK) message) to the SCC AS 520 via the IMS node-1 510 in response to the SDP offer response message.

In steps 8a to 8c of 'FIG. 13, the SCC AS 520 may send the response acknowledgement message to UE-3 300 via the IMS node-1 510 and the IMS node-2 610.

In steps 9a to 9c of FIG. 13, UE-3 300 may transmit a session setup response message (e.g., SIP 200 OK message indicating session setup acceptance) to the SCC AS 520 via the IMS node-2 520 and the IMS node-1 510.

In steps 9d to 9e of FIG. 13, the SCC AS 520 may transmit the session setup response message to UE-1 110. Accordingly, a session including Media-A and Media-B is established between UE-1 110 and UE-3 300.

In step 10 of FIG. 13, assume that UE-1 110 (or the user A) determines that Media-A is transferred to UE-2 120.

Steps 11a to 15b of FIG. 13 is equal to steps 7a to 11b of FIG. 11 and thus a detailed description thereof will be omitted.

In the example of FIG. 13, UE-3 300 includes the IUT restriction related information in the SDP offer response message of step 3 and provides the SDP offer response message to UE-1 110 via the SCC AS 520. However, the present invention is not limited thereto and UE-3 300 may include the IUT restriction related information in the session setup response message (that is, a final response message (e.g., SIP 200 OK) to SIP INVITE) of step 9a. Alternatively, the IUT restriction related information may be included in a message (e.g., the 200 OK message sent by UE-3 300 in response to the session update message sent by UE-1 110) other than the message sent from UE-3 300 to UE-1 110 (via the SCC AS 520), for session setup between UE-1 110 and UE-3 300. That is, UE-3 300 may include the IUT restriction related information in the SDP offer response message, the session setup response message or another message transmitted to UE-1 110 via the SCC AS 520.

In step 9a of FIG. 12 and step 13a of FIG. 13, the SCC AS 520 provides the IUT request related information to UE-3 300 to query whether the requested IUT operation is permitted by UE-3 300. At this time, the IUT request related information may be piggybacked on remote leg update performed as the IUT operation of the SCC AS 520. Alternatively, the SCC AS 520 may include the IUT request related information in a separate message (an existing SIP message or a message newly defined for the present invention) and query whether the requested IUT operation is permitted by UE-3 300.

### Embodiment 7

The present embodiment relates to a method of transmitting IUT restriction related information via an IMS registration message.

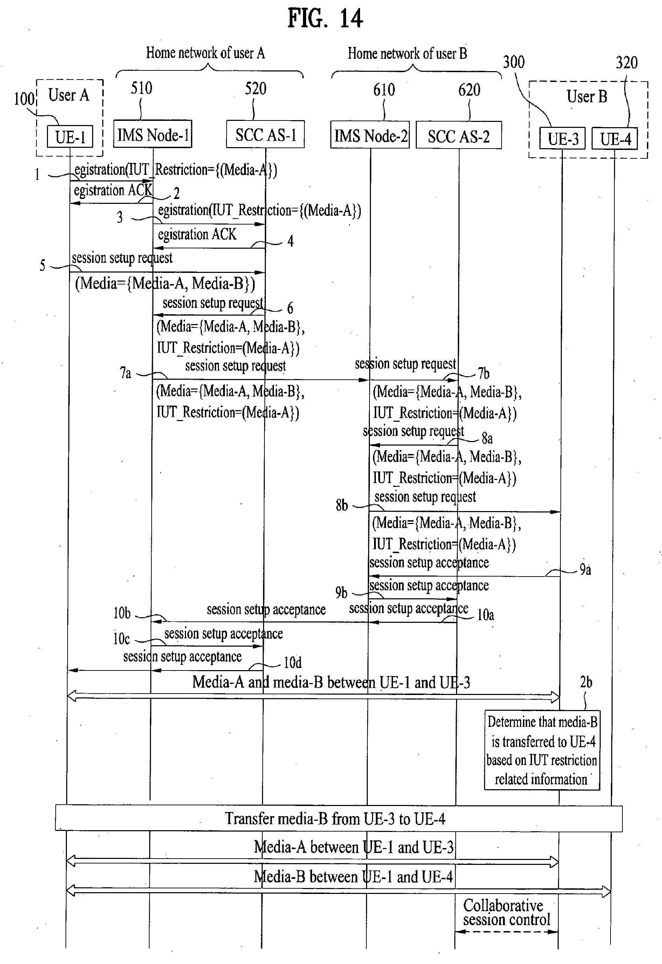

FIG. 14 shows an IUT restriction operation process according to one embodiment of the present invention.

In Fig. 14, assume that UE-1 100 belongs to a user A and UE-3 310 and UE-4 320 belong to a user B. The present invention is not limited thereto and the principles of the present invention are equally applicable to the case in which UE-3 310 and UE-4 320 belong to different users.

In the example of FIG. 14, home networks to which the users subscribe are shown. The home network to which the user A subscribes includes an IMS node-1 510 and an SCC

AS-1 520. The home network to which the user B subscribes includes an IMS node-2 610 and an SCC AS-2 620. Each of the IMS node-1 510 and the IMS node-2 610 may include a CSCF (P-CSCF, S-CSCF and/or I-CSCF).

In addition, in the example of FIG. 14, when UE-1 100 performs IMS registration, IUT restriction related information of UE-1 100 is included to perform registration. Assume that UE-3 310 and UE-4 320 which are counterpart UEs of an established session has already performed IMS registration. For example, the IUT restrictions related information of UE-3 310 and UE-4 320 may be included in an IMS registration message to be delivered to a network node.

In step 1 of FIG. 14, UE-1 100 may transmit a registration request message (e.g., SIP REGISTER message) to the IMS node-1 510 in order to register with a home network thereof. The registration request message may include IUT restriction related information applied to a session to be established during a valid IMS registration period. In the example of FIG. 14, IUT_Restriction={Media-A} information indicating that all IUT operations for Media-A are restricted without distinction of target is included.

In step 2 of FIG. 14, the IMS node-1 510, which has received the IMS registration request message from UE-1 100, may transmit a registration acknowledgement message (e.g., SIP 200 OK) to UE-1 100.

In step 3 of FIG. 14, the IMS node-1 510 may transmit a registration request message to the SCC AS-1 520 which serves UE-1 100 in order to request registration of UE-1 100. At this time, the IMS node-1 510 may include the IUT restriction related information, which is included in the registration request message by UE-1 100 in step 1 of FIG. 14, in the registration request message transmitted to the SCC AS-1 520.

In step 4 of FIG. 14, the SCC AS-1 520, which has received the IMS registration request message from UE-1 100, may store the IUT restriction related information. In addition, the SCC AS-1 520 may transmit a registration acknowledgement message to the IMS node-1 510.

In steps 5 to 8b of FIG. 14, UE-1 100 may transmit a session setup request message (e.g., SIP INVITE) to UE-3 310 in order to establish a session including Media-A and Media-B with UE-3 310.

In step 5 of FIG. 14, UE-1 100 may transmit the session setup request message to the SCC AS-1 520 via the IMS node-1 510.

In step 6 of FIG. 14, the SCC AS-1 520, which serves UE-1 110, may deliver the session setup request message to UE-3 300. At this time, the SCC AS-1 520 may include the IUT restriction related information stored in step 4 in the session setup request message.

In steps 7a to 7b of FIG. 14, the session setup request message may be transmitted to the SCC AS-2 620 which serves UE-3 310 via the IMS node-1 510 which serves UE-1 100.

In steps 8a to 8b of FIG. 14, the SCC AS-2 520 which serves UE-3 310 may store the IUT restriction related information included in the session setup request message received from UE-1 100. In addition, the SCC AS-2 620 may transmit the session setup request message including the IUT restriction related information to UE-3 310. UE-3 310 may store the IUT restriction related information included in the received session setup request message.

Since the SCC AS-2 620 stores the IUT restriction related information of UE-1 100, when an IUT request is received from a target UE (e.g., UE-4 320), the SCC AS-2 620 may determine whether the requested IUT operation is performed based on the above information. For example, when UE-4 320 makes a request for replicating Media-A from UE-3 310, the SCC AS-2 620 may know that all IUT operations for Media-A are restricted from the IUT restriction related information and thus may not accept the request of UE-4 320.

Here, when the SCC AS-2 620 transmits the message received from UE-1 100, which is a remote end, to UE-3 310, a determination as to whether the IUT restriction related information of the remote end is included may be made based on at least one of the following information: a) IUT restriction capability information received from a counterpart (that is, UE-3 310) of an established session; b) IUT operation capability information received from UE-3 310; c) subscriber information of a user to which UE-3 310 belongs; d) IUT restriction related information sent by the remote end UE-1 100; e) IUT restriction supporting capabilities of the SCC AS-2 620; or f) provider policy. The SCC AS-2 620 may include the IUT restriction related information received from the remote end (UE-1 100) in the message sent to UE-3 310 without change or modify the IUT restriction related information and include the modified IUT restriction related information in the message sent to UE-3 310.

In steps 9a to 9b of FIG. 14, UE-3 310 may transmit a session setup response message (e.g., SIP 200 OK message indicating session establishment acceptance) to the SCC AS-2 620 via the IMS node-2 610 in response to the session setup request.

In steps 10a to 10d of FIG. 14, the SCC AS-2 620 may deliver the session setup response message to UE-1 100 via the IMS node-2 610, the IMS node-1 510, the SCC AS-1 520 and the IMS node-1 510 in this order. Accordingly, a session including Media-A and Media-B is established between UE-1 100 and UE-3 310.

In step 11 of FIG. 14, UE-3 310 (or the user B) may confirm that the IUT operation for Media-B is permitted based on the IUT restriction related information (that is, the IUT restriction related information received from UE-1 100 which is a counterpart of the session) stored in step 8b. Here, assume that UE-3 310 (or the user B) determines that Media-B is transferred to UE-4 320.

In step 12 of FIG. 14, the IUT operation for transferring Media-B from UE-3 310 to UE-4 320 may be performed.

More specifically, UE-3 310 may transmit a transfer request message, for example, a media transfer request message (e.g., an SIP REFER message) to the SCC AS-2 620 in order to transfer Media-B to UE-4 320. The SCC AS-2 620 may authenticate or verify the transfer request message from UE-3 310. Such authentication or verification may be performed based on subscriber information of UE-3 310. For example, authentication or verification may include verifying whether the IUT operation of UE-3 310 is permitted. Alternatively, authentication or verification may include verifying whether the media on the UE-3 310 may be transferred to UE-4 320. Next, the SCC AS-2 620 may transmit the session setup request message (e.g., SIP INVITE) including information about Media-B to UE-4 320 via the IMS node-2 610 based on the media transfer request message. UE-4 320 may transmit a session setup response message (e.g., SIP 200 OK message indicating session setup acceptance) to the SCC AS-2 620 via the IMS node-2 610 in response to the session setup request message. The SCC AS-2 620 may transmit a session update request message (e.g., SIP Re-INVITE) including change information due to transfer of Media-B to UE-1 100 via the IMS node-2 610 and the IMS node-1 510. UE-1 100 may transmit a session update acceptance message (e.g., SIP 200 OK message) in response to the session update request from the SCC AS-2 620. Thus, a session including Media-B may be established between UE-4 320 and UE-1 100. The SCC AS-2 620 may transmit a response message, for example, a media transfer response message, indicating completion of the transfer request to UE-3 310 via the IMS node-2 610.

UE-3 310 has control rights for the collaborative session including Media-A and Media-B even after Media-B is transferred to UE-4 320. That is, UE-3 310 becomes a controller UE and UE-4 320 becomes a controlle UE.

In the example of FIG. 14, UE-1 100 includes the IUT restriction related information in the IMS registration message of step 1 and provides the IMS registration message to UE-3 310 via the SCC AS-1 520 and the SCC AS-2 620. However, the present invention is not limited thereto and UE-1 100 may include the IUT restriction related information in a message other than the message transmitted from UE-1 100 to UE-3 310 (via the SCC AS-1 520 and the SCC AS-2 620) for session setup between UE-1 100 and UE-3 310. Accordingly, each of the SCC AS-1 520, the SCC AS-2 620 and UE-3 310 may store the IUT restriction related information of UE-1 100.

In the present embodiment described with reference to FIG. 14, the IUT restriction related information of UE-1 100 may be included in one or more messages sent from UE-1 100 to UE-3 310 which is the counterpart of the session. In this case, UE-3 310 may hold last received information.

The above-described embodiments of the present invention may be independently applied or two or more of the above-described embodiments may be simultaneously applied.

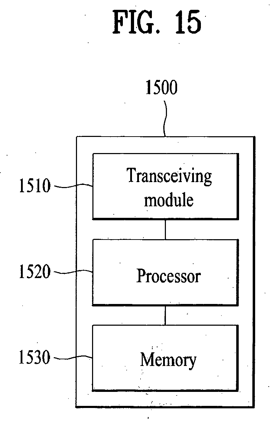

FIG. 15 is a diagram showing the configuration of a transceiver apparatus according to an embodiment of the present invention.

Referring to FIG. 15, the transceiver apparatus 1500 according to the present invention may include a transceiver module 1510, a processor 1520 and a memory 1530. The transceiver module 1510 may be configured to transmit a variety of signals, data and information to an external device and to receive a variety of signals, data and information from the external device. The transceiver apparatus 1500 may be connected to the external device by wire and/or wirelessly. The processor 1520 may control the operation of the transceiver apparatus 1500 and perform a function for processing information to be transmitted and received to and from the external device. The memory 1530 may store the processed information for a predetermined time and may be replaced by a component such as a buffer (not shown).

The transceiver apparatus 1500 according to one embodiment of the present invention may be configured as an IMS network node apparatus for performing an IUT operation associated with a first UE and a second UE. The IUT operation associated with the first UE and the second UE may correspond to operation for transferring, replicating or sharing all or some of media configuring a session between the first UE and a remote end to the second UE. The processor 1510 of the transceiver apparatus 1500 may be configured to receive a message including IUT restriction related information of the remote end from the remote end using the transceiver module 1510. Here, the received IUT restriction related information of the remote end may be stored in the memory 1530. In addition, the processor 1520 may be configured to receive a message including an IUT request from the first UE using the transceiver module 1510. The processor 1520 may be configured to determine whether the IUT operation is performed according to the IUT request based on the IUT restriction related information of the remote end.

In the above-described detailed configuration of the transceiver apparatus 1500, details of the above-described various embodiments of the present invention may be independently applied or 2 or more embodiments may be applied at the same time. In this case, overlapping details will be omitted from the description for simplicity and clarity.

The embodiments of the present invention can be implemented by a variety of means, for example, hardware, firmware, software, or a combination thereof.

In the case of implementing the present invention by hardware, the present invention can be implemented with application specific integrated circuits (ASICs), digital signal processors (DSPs), digital signal processing devices (DSPDs), programmable logic devices (PLDs), field programmable gate arrays (FPGAs), a processor, a controller, a microcontroller, a microprocessor, etc.

If operations or functions of the present invention are implemented by firmware or software, the present invention can be implemented in the form of a variety of formats, for example, modules, procedures, functions, etc. Software code may be stored in a memory unit so as to be driven by a processor. The memory unit is located inside or outside of the processor, so that it can communicate with the aforementioned processor via a variety of well-known parts.

The detailed description of the exemplary embodiments of the present invention has been given to enable those skilled in the art to implement and practice the invention. Although the invention has been described with reference to the exemplary embodiments, those skilled in the art will appreciate that various modifications and variations can be made in the present invention without departing from the scope of the invention described in the appended claims. For example, those skilled in the art may use each construction described in the above embodiments in combination with each other. Accordingly, the invention should not be limited to the specific embodiments described herein, but should be accorded the broadest scope consistent with the principles and novel features disclosed herein.

The aforementioned embodiments are achieved by combination of structural elements and features of the present invention in a predetermined manner. Each of the structural elements or features should be considered selectively unless specified separately. Each of the structural elements or features may be carried out without being combined with other structural elements or features. Additionally, some structural elements and/or features may be combined with one another to constitute the embodiments of the present invention. The order of operations described in the embodiments of the present invention may be changed. Some structural elements or features of one embodiment may be included in another embodiment, or may be replaced with corresponding structural elements or features of another embodiment but within the scope of the claims.

### [Industrial Applicability]

The above-described embodiments of the present invention are applicable to various mobile communication systems.

## Claims

1. A method of, at an Internet protocol multimedia subsystem, IMS, network node, performing an inter-user equipment transfer, IUT, operation associated with a first user equipment (110), UE, and a second UE (120), the method comprising:
receiving a message including IUT restriction related information of a remote end (300) from the remote end (300);
receiving a message including an IUT request from the first UE (110), in relation to an existing session between the first UE (110) and the remote end (300); and
determining whether the IUT operation is restricted based on the IUT restriction related information of the remote end (300), and
wherein the method is **characterized by** further comprising:
when the IUT request is determined to be restricted based on the received IUT restriction related information, transmitting a query message to the remote end (300) so as to know whether the IUT request is permitted, wherein the query message includes information about media for the IUT operation;
receiving a response for the query message from the remote end (300); and
transmitting a rejection message to the first UE (110) when the received response corresponds to a rejection response.

2. The method according to claim 1, wherein the query message further includes at least one of information indicating that the requested IUT operation is one of transfer, replication or sharing or identification information of the second UE (120).

3. The method according to claim 1, wherein the IUT restriction related information includes at least one of IUT restriction information per media, IUT restriction information per IUT operation type, IUT restriction information per target and information indicating whether the remote end (300) has IUT restriction capabilities.

4. The method according to claim 1, further comprising determining whether the IUT restriction related information of the remote end (300) is transmitted to the first UE (110).

5. The method according to claim 4, wherein whether the IUT restriction related information of the remote end (300) is transmitted to the first UE (110) is determined based on at least one of IUT restriction capability information of the first UE (300), IUT operation capability information of the first UE (300), subscriber information of a user to which the first UE (300) belongs, IUT restriction related information of the remote end, IUT restriction supporting capability information of the network node or provider policy.

6. The method according to claim 1, wherein the message including IUT restriction related information, is one of a session establishment related message between the first UE (110) and the remote end (300) or an IMS registration request message from the remote end (300).

7. The method according to claim 6, wherein the session establishment related message is one of a session setup request message from the first UE (110), a response message of the remote end (300) to session description protocol (SDP) offer from the first UE (110) or a session setup response message of the remote end (300) to the session setup request message from the first UE (110).

8. The method according to claim 1, wherein the IMS network node is a service centralization and continuity application server, SCC AS, which serves the first UE (110).

9. The method according to claim 1, wherein communication of each of the first UE (110), the second (120) UE and the remote end (300) of the IMS network node is performed via a call session control function, CSCF.

10. An Internet protocol multimedia subsystem ,IMS, network node apparatus (1500) for performing an inter-user equipment transfer, IUT, operation associated with a first user equipment (110), UE, and a second UE (120), the IMS network node apparatus (1500) comprising:
a transceiver module (1510) configured to transmit and receive a signal to and from an external device; and
a processor (1520) configured to control the transceiver module (1510),
wherein the processor (1520) is configured to:
receive a message including IUT restriction related information of a remote end (300) from the remote end (300) using the transceiver module (1510);
receive a message including an IUT request from the first UE (110), in relation to an existing session between the first UE (110) and the remote end (300), using the transceiver module (1520); and
determine whether the IUT operation is restricted based on the IUT restriction related information of the remote end (300), and
wherein the IMS network node apparatus (1500) is **characterized in** the processor (1520) further configured to:
when the IUT request is determined to be restricted based on the received IUT restriction related information, transmit a query message to the remote end (300) using the transceiver module (1520) so as to know whether the IUT request is permitted, wherein the query message includes information about media for the IUT operation,
receive a response for the query message from the remote end (300) using the transceiver module (1520), and
transmit a rejection message to the first UE (110) when the received response corresponds to a rejection response using the transceiver module (1520).

## Patentansprüche

1. Verfahren zum Ausführen eines Vorgangs einer Übertragung zwischen Benutzervorrichtungen, IUT-Vorgangs, der einer ersten Benutzervorrichtung, UE, (110) und einer zweiten UE (120) zugeordnet ist, an einem Internetprotokoll-Multimediasubsystem-Netzwerkknoten, IMS-Netzwerkknoten, wobei das Verfahren Folgendes umfasst:
Empfangen einer Nachricht, die IUT-beschränkungsbezogene Informationen eines entfernten Endes (300) beinhaltet, von dem entfernten Ende (300);
Empfangen einer Nachricht, die eine IUT-Anfrage von der ersten UE (110) in Bezug auf eine bestehende Sitzung zwischen der ersten UE (110) und dem entfernten Ende (300) beinhaltet; und
Ermitteln, ob der IUT-Vorgang beschränkt ist, auf der Grundlage der IUT-beschränkungsbezogenen Informationen des entfernten Endes (300), und
wobei das Verfahren **dadurch gekennzeichnet ist, dass** es ferner Folgendes umfasst:
wenn auf der Grundlage der empfangenen IUT-beschränkungsbezogenen Informationen ermittelt wird, dass die IUT-Anfrage beschränkt ist, Übertragen einer Abfragenachricht an das entfernte Ende (300), um festzustellen, ob die IUT-Anfrage zugelassen ist, wobei die Abfragenachricht Informationen über Medien für den IUT-Vorgang beinhaltet;
Empfangen einer Antwort auf die Abfragenachricht von dem entfernten Ende (300); und
Übertragen einer Ablehnungsnachricht an die erste UE (110), wenn die empfangene Antwort einer Ablehnungsantwort entspricht.

2. Verfahren nach Anspruch 1, wobei die Abfragenachricht ferner Informationen, die anzeigen, dass der angefragte IUT-Vorgang ein Transfer, eine Replikation oder ein Teilen ist, und/oder Identifikationsinformationen der zweiten UE (120) beinhaltet.

3. Verfahren nach Anspruch 1, wobei die IUT-beschränkungsbezogenen Informationen IUT-Beschränkungsinformationen pro Medium, IUT-Beschränkungsinformationen pro IUT-Vorgangstyp, IUT-Beschränkungsinformationen pro Ziel und/oder Informationen, die anzeigen, ob das entfernte Ende (300) IUT-Beschränkungsfähigkeiten aufweist, beinhalten.

4. Verfahren nach Anspruch 1, ferner umfassend das Ermitteln, ob die IUT-beschränkungsbezogenen Informationen des entfernten Endes (300) an die erste UE (110) übertragen werden.

5. Verfahren nach Anspruch 4, wobei das Ermitteln, ob die IUT-beschränkungsbezogenen Informationen des entfernten Endes (300) an die erste UE (110) übertragen werden, auf der Grundlage von IUT-Beschränkungsfähigkeitsinformationen der ersten UE (300), IUT-Vorgangsfähigkeitsinformationen der ersten UE (300), Teilnehmerinformationen eines Benutzers, zu dem die erste UE (300) gehört, IUT-beschränkungsbezogenen Informationen des entfernten Endes, IUT-Beschränkungsunterstützungsfähigkeitsinformationen des Netzwerkknotens und/oder der Provider-Policy erfolgt,

6. Verfahren nach Anspruch 1, wobei die Nachricht, die IUT-beschränkungsbezogene Informationen beinhaltet, eine sitzungsaufbaubezogene Nachricht zwischen der ersten UE (110) und dem entfernte Ende (300) oder eine IMS-Registrierungsanfragenachricht von dem entfernten Ende (300) ist.

7. Verfahren nach Anspruch 6, wobei die sitzungsaufbaubezogene Nachricht eine Sitzungseinrichtungsanfragenachricht von der ersten UE (110), eine Antwortnachricht des entfernten Endes (300) auf ein Sitzungsbeschreibungsprotokoll-Angebot, SDP-Angebot, von der ersten UE (110) oder eine Sitzungseinrichtungsantwortnachricht des entfernten Endes (300) auf die Sitzungseinrichtungsanfragenachricht von der ersten UE (110) ist.

8. Verfahren nach Anspruch 1, wobei der IMS-Netzwerkknoten ein Dienstzentralisierungs-und -kontinuitäts-Anwendungsserver, SCC-AS, ist, welcher der ersten UE (110) dient.

9. Verfahren nach Anspruch 1, wobei die Kommunikation der ersten UE (110), der zweiten UE (120) und des entfernten Endes (300) des IMS-Netzwerkknotens jeweils über eine Call-Session-Control-Funktion, CSCF, ausgeführt wird.

10. Internetprotokoll-Multimediasubsystem-Netzwerkknotenvorrichtung, IMS-Netzwerkknotenvorrichtung, (1500) zum Ausführen eines Vorgangs einer Übertragung zwischen Benutzervorrichtungen, IUT-Vorgangs, der einer ersten Benutzervorrichtung, UE, (110) und einer zweiten UE (120) zugeordnet ist, wobei die IMS Netzwerkknotenvorrichtung (1500) Folgendes umfasst:
ein Transceivermodul (1510), das dazu ausgestaltet ist, ein Signal an eine externe Vorrichtung zu übertragen und von einer externen Vorrichtung zu empfangen; und
einen Prozessor (1520), der dazu ausgestaltet ist, das Transceivermodul (1510) zu steuern,
wobei der Prozessor (1520) für Folgendes ausgestaltet ist:
unter Verwendung des Transceivermoduls (1510) eine Nachricht, die IUT-beschränkungsbezogene Informationen eines entfernten Endes (300) beinhaltet, von dem entfernten Ende (300) zu empfangen;
unter Verwendung des Transceivermoduls (1520) eine Nachricht zu empfangen, die eine IUT-Anfrage von der ersten UE (110) in Bezug auf eine bestehende Sitzung zwischen der ersten UE (110) und dem entfernten Ende (300) beinhaltet; und
auf der Grundlage der IUT-beschränkungsbezogenen Informationen des entfernten Endes (300) zu ermitteln, ob der IUT-Vorgang beschränkt ist, und
wobei die IMS-Netzwerkknotenvorrichtung (1500) **dadurch gekennzeichnet ist, dass** der Prozessor (1520) ferner für Folgendes ausgestaltet ist:
wenn auf der Grundlage der empfangenen IUT-beschränkungsbezogenen Informationen ermittelt wird, dass die IUT-Anfrage beschränkt ist, unter Verwendung des Transceivermoduls (1520) eine Abfragenachricht an das entfernte Ende (300) zu übertragen, um festzustellen, ob die IUT-Anfrage zugelassen ist, wobei die Abfragenachricht Informationen über Medien für den IUT-Vorgang beinhaltet;
unter Verwendung des Transceivermoduls (1520) eine Antwort auf die Abfragenachricht von dem entfernten Ende (300) zu empfangen und
unter Verwendung des Transceivermoduls (1520) eine Ablehnungsnachricht an die erste UE (110) zu übertragen, wenn die empfangene Antwort einer Ablehnungsantwort entspricht.

## Revendications

1. Procédé pour, en un noeud de réseau d'un sous-système multimédia de protocole Internet (IMS, « Internet protocol Multimedia Subsystem »), effectuer une opération de transfert inter-équipements d'utilisateur (IUT, « Inter-User equipment Transfer »), associée à un premier équipement d'utilisateur (UE, « User Equipment ») (110) et un second UE (120), le procédé comprenant :
recevoir un message incluant une information relative à une restriction d'IUT d'une extrémité distante (300) en provenance de l'extrémité distante (300) ;
recevoir un message incluant une demande d'IUT en provenance du premier UE (110) en rapport avec une session existante entre le premier UE (110) et l'extrémité distante (300) ; et
déterminer s'il y a une restriction sur l'opération d'IUT sur la base de l'information relative à la restriction d'IUT de l'extrémité distante (300), et
dans lequel le procédé est **caractérisé en ce qu'**il comprend en outre :
lorsqu'il est déterminé qu'il y a une restriction sur la demande d'IUT sur la base de l'information reçue relative à la restriction d'IUT, transmettre un message d'interrogation à l'extrémité distante (300) afin de savoir si la demande d'IUT est permise, le message d'interrogation incluant une information concernant un support pour l'opération d'IUT ;
recevoir une réponse pour le message d'interrogation en provenance de l'extrémité distante (300) ; et
transmettre un message de rejet au premier UE (110) lorsque la réponse reçue correspond à une réponse de rejet.

2. Procédé selon la revendication 1, dans lequel le message d'interrogation inclut en outre au moins une information parmi une information indiquant que l'opération d'IUT demandée est une information de transfert, de réplication ou de partage, et une information d'identification du second UE (120).

3. Procédé selon la revendication 1, dans lequel l'information relative à une restriction d'IUT inclut au moins une information parmi une information de restriction d'IUT par support, une information de restriction d'IUT par type d'opération d'IUT, une information de restriction d'IUT par cible et une information indiquant si l'extrémité distante (300) a des capacités de restriction d'IUT.

4. Procédé selon la revendication 1, comprenant en outre déterminer si l'information, relative à une restriction d'IUT de l'extrémité distante (300) est transmise au premier UE (110).

5. Procédé selon la revendication 4, dans lequel, il est déterminé si l'information relative à une restriction d'IUT de l'extrémité distante (300) est transmise au premier UE (110) sur la base d'au moins une information parmi une information de capacité de restriction d'IUT du premier UE (300), une information de capacité d'opération du premier UE (300), une information d'abonné d'un utilisateur auquel le premier UE (300) appartient, une information relative à une restriction d'IUT de l'extrémité distante, une information de capacité de support de restriction d'IUT du noeud de réseau et une politique de fournisseur.

6. Procédé selon la revendication 1, dans lequel le message incluant une information relative à une restriction d'IUT est un message parmi un message relatif à un établissement de session entre le premier UE (110) et l'extrémité distante (300) ou un message de demande d'enregistrement d'IMS en provenance de l'extrémité distante (300).

7. Procédé selon la revendication 6, dans lequel le message relatif à un établissement de session est un message parmi un message de demande d'établissement de session en provenance du premier UE (110), un message de réponse de l'extrémité distante (300) à une offre du protocole de description de session (SDP, « Session Description Protocol ») en provenance du premier UE (110) et un message de réponse d'établissement de session de l'extrémité distante (300) au message de demande d'établissement de session provenant du premier UE (110).

8. Procédé selon la revendication 1, dans lequel le noeud de réseau IMS est un serveur applicatif de centralisation et de continuité de services, SCC AS (« Service Centralization and Continuity Application Server »), qui dessert le premier UE (110).

9. Procédé selon la revendication 1, dans lequel la communication de chacun du premier UE (110), du second UE (120) et de l'extrémité distante (300) du noeud de réseau IMS est réalisée via une fonction de commande de session d'appel, CSCF (« Call Session Control Function »).

10. Dispositif de noeud de réseau d'un sous-système multimédia de protocole Internet (IMS, « Internet protocol Multimedia Subsystem ») (1500) pour effectuer une opération de transfert inter-équipements d'utilisateur (IUT, « Inter-User equipment Transfer »), associée à un premier équipement d'utilisateur (UE, « User Equipment ») (110) et un second UE (120), le dispositif de noeud de réseau IMS (1500) comprenant :
un module émetteur-récepteur (1510) configuré pour émettre et recevoir un signal à destination et en provenance d'un dispositif externe ; et
un processeur (1520) configuré pour commander le module émetteur-récepteur (1510),
dans lequel le processeur (1520) est configuré pour :
recevoir un message incluant une information relative à une restriction d'IUT d'une extrémité distante (300) en provenance de l'extrémité distante (300) à l'aide du module émetteur-récepteur (1510) ;
recevoir un message incluant une demande d'IUT en provenance du premier UE (110) en rapport avec une session existante entre le premier UE (110) et l'extrémité distante (300) à l'aide du module émetteur-récepteur (1510) ; et
déterminer s'il y a une restriction sur l'opération d'IUT sur la base de l'information relative à la restriction d'IUT de l'extrémité distante (300), et
dans lequel le dispositif de noeud de réseau IMS (1500) est **caractérisé en ce que** le processeur (1520) est en outre configuré pour :
lorsqu'il est déterminé qu'il y a une restriction sur la demande d'IUT sur la base de l'information reçue relative à la restriction d'IUT, transmettre un message d'interrogation à l'extrémité distante (300) afin de savoir si la demande d'IUT est permise, le message d'interrogation incluant une information concernant un support pour l'opération d'IUT ;
recevoir une réponse pour le message d'interrogation en provenance de l'extrémité distante (300) à l'aide du module émetteur-récepteur (1510) ; et
transmettre un message de rejet au premier UE (110) à l'aide du module émetteur-récepteur (1510) lorsque la réponse reçue correspond à une réponse de rejet.
